(19) Europäisches Patentamt
European Patent Office
Office européen des brevets

(11) Veröffentlichungsnummer: **0 073 463**
**B1**

(12) **EUROPÄISCHE PATENTSCHRIFT**

(45) Veröffentlichungstag der Patentschrift: **23.10.85**

(51) Int. Cl.⁴: **C 09 B 67/22**, C 09 B 67/20, C 09 B 45/00, C 09 B 67/42

(21) Anmeldenummer: **82107774.0**

(22) Anmeldetag: **25.08.82**

# (54) Einschlussverbindungen, Interkalationsverbindungen und feste Lösungen farbiger organischer Metallverbindungen.

(30) Priorität: **02.09.81 DE 3134725**
**29.04.82 DE 3215876**

(43) Veröffentlichungstag der Anmeldung:
**09.03.83 Patentblatt 83/10**

(45) Bekanntmachung des Hinweises auf die Patenterteilung:
**23.10.85 Patentblatt 85/43**

(84) Benannte Vertragsstaaten:
**CH DE FR GB LI**

(56) Entgegenhaltungen:
**DE - A - 1 619 622**
**FR - A - 2 121 048**

**CHEMICAL ABSTRACTS, Band 83, Nr. 18, 3. November 1975, Seite 108, Nr. 149108n, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Lorenz, Manfred, Dr., Roggendorfstrasse 51, D-5000 Köln (DE)**
Erfinder: **Schündehütte, Karl Heinz, Dr., Klief 75, D-5090 Leverkusen 3 (DE)**

**EP 0 073 463 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue Einschlußverbindungen, Interkalationsverbindungen und feste Lösungen farbiger organischer Metallverbindungen, Verfahren zu ihrer Herstellung sowie ihre Verwendung als Pigmente.

Die neuen Verbindungen oder festen Lösungen sind dadurch gekennzeichnet, daß eine farbige organische Metallverbindung, die ein schichtförmiges Kristallgitter bildet, bei dem die Bindung innerhalb einer Schicht im wesentlichen über Wasserstoffbrücken und/oder Metallionen erfolgt, mindestens eine andere Verbindung eingeschlossen enthält, mit Ausnahme einer Stoffzusammensetzung, die aus 45 bis 82 Gew.-% Azobarbitursäure-Nickel-1 : 1-Komplex, 3 bis 15 Gew.-% Benzolsulfonamid, 5 bis 20 Gew.-% Nickelacetat und 10 bis 20 Gew.-% Wasser besteht.

Vorzugsweise handelt es sich um farbige organische Metallverbindungen, die ein Kristallgitter ausbilden, daß aus im wesentlichen ebenen Schichten besteht.

Eingeschlossen sein können sowohl organische als auch anorganische Verbindungen.

Bei den farbigen organischen Metallverbindungen, welche die neuen Einschlußverbindungen, Interkalationsverbindungen oder festen Lösungen bilden, handelt es sich bevorzugt um Metallsalze oder Metallkomplexe von Verbindungen, die in einer ihrer tautomeren Strukturen der Formel

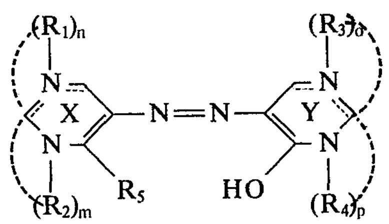

(I)

entsprechen, in der die mit

X und Y bezeichneten Ringe je einen oder zwei Substituenten aus der Reihe

$$=O,\quad =S,\quad =NR_7,\quad -NR_6R_7,\quad -OR_6,\quad -SR_6,\quad -COOR_6,\quad -CN,$$

$$-CONR_6R_7,\quad -SO_2R_8,\quad -\underset{\substack{|\\R_6}}{N}-CN,\quad \text{Alkyl},\quad \text{Cycloalkyl},\quad \text{Aryl},\quad \text{Aralkyl}$$

tragen können, wobei die Summe der endo- und exocyclischen Doppelbindungen für jeden der Ringe X und Y drei ist,

$R_6$ für Wasserstoff, Alkyl, Cycloalkyl, Aryl oder Aralkyl und

$R_7$ für Wasserstoff, Cyan, Alkyl, Cycloalkyl, Aryl, Aralkyl oder Acyl stehen und

$R_8$ Alkyl, Cycloylkyl, Aryl oder Aralkyl bezeichnet,

$R_1$, $R_2$, $R_3$, $R_4$ für Wasserstoff, Alkyl, Cycloalkyl, Aryl, oder Aralkyl stehen und weiterhin, wie in Formel I durch die unterbrochenen Linien angedeutet wird, 5- oder 6-gliedrige Ringe ausbilden können, an die weitere Ringe ankondensiert sein können,

$R_5$ —OH, $-NR_6R_7$, Alkyl, Cycloalkyl, Aryl oder Aralkyl bezeichnet, wobei die für $R_1-R_8$ genannten CH-Bindungen enthaltenden Substituenten ihrerseits substituiert sein können und m, n, o, p 1 oder für den Fall, daß von den Ring-Stickstoffatomen Doppelbindungen ausgehen, wie in Formel I durch die punktierten Linien angedeutet wird, auch 0 bezeichnen können.

Weiterhin bevorzugt handelt es sich bei den farbigen organischen Metallverbindungen um folgende Verbindungen:

1. Verbindungen, die in Form ihrer freien Säuren der Formel I entsprechen, bei denen der mit X bezeichnete Ring für einen Ring der Formeln

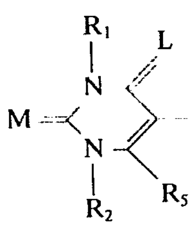

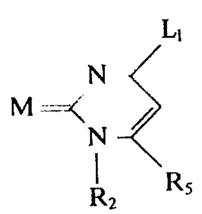

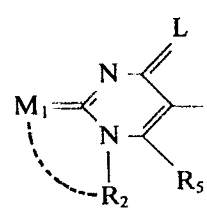

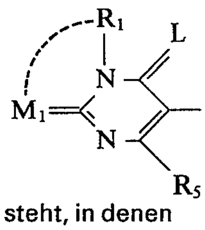

oder

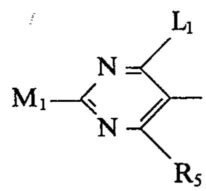

steht, in denen

L, M = O, = S oder = $NR_6$,

$L_1$ Wasserstoff, $-OR_6$, $-SR_6$, $-NR_6R_7$, $-COOR_6$, $-CONR_6R_7$, $-CN$, Alkyl, Cycloalkyl, Aryl, Aralkyl und

$M_1$ $-OR_6$, $-SR_6$, $-NR_6R_7$, $-COOR_6$, $-CONR_6R_7$, $-CN$, $-SO_2R_8$, $-\underset{R_6}{\underset{|}{N}}-CN$, Alkyl, Cycloalkyl, Aryl oder Aralkyl bezeichnen, wobei die Substituenten $M_1$ und $R_1$ oder $M_1$ und $R_2$ einen 5- oder 6-gliedrigen Ring ausbilden können.

2. Verbindungen, die in Form ihrer freien Säuren der Formel I entsprechen, bei denen der mit Y bezeichnete Ring für einen Ring der Formel

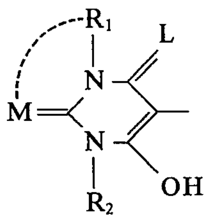

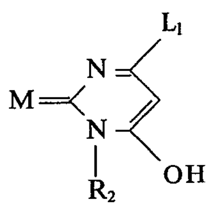

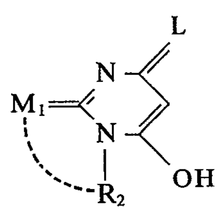

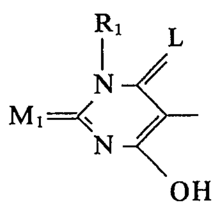

oder

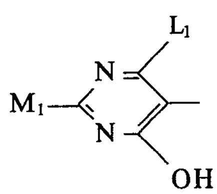

steht.

3. Verbindungen, die in Form ihrer freien Säuren in einer ihrer tautomeren Strukturen den Formeln II oder III entsprechen

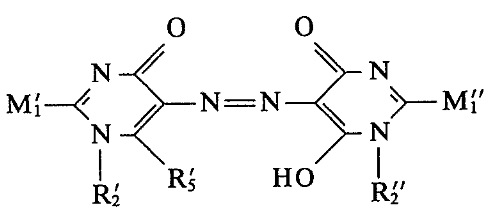

(II)

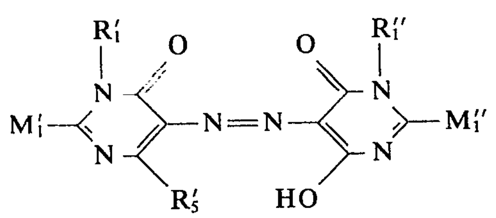

(III)

in denen

$R_5'$ $-OH$ oder $-NH_2$ bezeichnet,

$R_1'$, $R_1''$, $R_2'$, $R_2''$ für Wasserstoff steht und
$M_1'$, $M_1''$ Wasserstoff, $-OH$, $-NH_2$, $-NHCN$, Arylamino oder Acylamino bezeichnen.

In den vorstehenden Formeln haben die Substituenten vorzugsweise die folgenden Bedeutungen:

Substituenten in der Bedeutung von Alkyl bezeichnen vorzugsweise $C_1-C_6$-Alkyl, das beispielsweise durch Halogen, wie Chlor, Brom, Fluor, $-OH$, $-CN$, $-NH_2$ oder $C_1-C_6$-Alkoxy substituiert sein kann.

Substituenten in der Bedeutung von Cycloalkyl bezeichnen vorzugsweise $C_3-C_7$-Cycloalkyl, insbesondere $C_5-C_6$-Cycloalkyl, das beispielsweise durch $C_1-C_6$-Alkyl, $C_1-C_6$-Alkoxy, Halogen wie Cl, Br, F, $C_1-C_6$-Alkoxy, $-OH$, $-CN$ und $-NH_2$ substituiert sein kann.

Substituenten in der Bedeutung von Aryl bezeichnen vorzugsweise Phenyl oder Naphthyl, die beispielsweise durch Halogen wie F, Cl, Br, $-OH$, $C_1-C_6$-Alkyl, $C_1-C_6$-Alkoxy, $-NH_2$, $-NO_2$ und $-CN$ substituiert sein können.

Substituenten in der Bedeutung von Aralkyl bezeichnen bevorzugt Phenyl- oder Naphthyl-$C_1-C_4$-alkyl, die in den aromatischen Resten beispielsweise durch Halogen wie F, Cl, Br, $-OH$, $C_1-C_6$-Alkyl, $C_1-C_6$-Alkoxy, $-NH_2$, $-NO_2$ und $-CN$ substituiert sein können.

Substituenten in der Bedeutung von Acyl bezeichnen vorzugsweise ($C_1-C_6$-Alkyl)-carbonyl, Phenylcarbonyl, $C_1-C_6$-Alkylsulfonyl, Phenylsulfonyl, gegebenenfalls durch $C_1-C_6$-Alkyl, Phenyl und Naphthyl substituiertes Carbamoyl, gegebenenfalls durch $C_1-C_6$-Alkyl, Phenyl und Naphthyl substituiertes Sulfamoyl oder gegebenenfalls durch $C_1-C_6$-Alkyl, Phenyl und Naphthyl substituiertes Guanyl, wobei die genannten Alkylreste beispielsweise durch Halogen wie Cl, Br, F, $-OH$, $-CN$, $-NH_2$ oder $C_1-C_6$-Alkoxy substituiert sein können und die genannten Phenyl- und Naphthylreste beispielsweise durch Halogen wie F, Cl, Br, $-OH$, $C_1-C_6$-Alkyl, $C_1-C_6$-Alkoxy, $-NH_2$, $-NO_2$ und $-CN$ substituiert sein können.

Für den Fall, daß $M_1R_1$ oder $M_1R_2$ bzw. $R_1$, $R_2$, $R_3$, $R_4$, wie in Formel I durch die unterbrochenen Linien angedeutet wird, 5- oder 6-gliedrige Ringe ausbilden, handelt es sich Vorzugsweise um Triazol-, Imidazol-, oder Benzimidazol-, Pyrimidin- oder Chinazolin-Ringsysteme.

Als Salze der Verbindungen der Formel I kommen vorzugsweise die Salze und Komplexe der Mono-, Di-, Tri- und Tetraanionen mit den Metallen Li, Cs, Mg, Cd, Co, Al, Cr, Sn, Pb, besonders bevorzugt Na, K, Ca, Sr, Ba, Zn, Fe, Ni, Cu, Mn, in Betracht.

Besondere Bedeutung kommen den Nickelsalzen, bzw. -komplexen zu.

Besondere Bedeutung im Rahmen der vorliegenden Erfindung als Wirtsverbingung für die festen Lösungen, Einschluß- und Interkalationsverbingungen besitzen weiterhin die Metallsalze und -komplexeder Cyan-imino-azobarbitursäure, die in einer ihrer tautomeren Formen der Formel

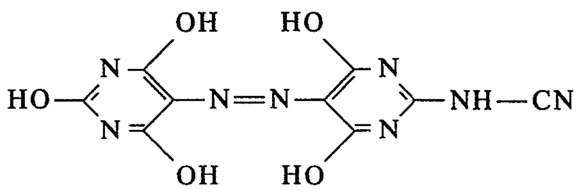

(IV)

entspricht insbesondere die Salze bzw. Komplexe des Mono- oder Dianions.

Die Salze lassen sich beispielsweise durch folgende Formeln darstellen:

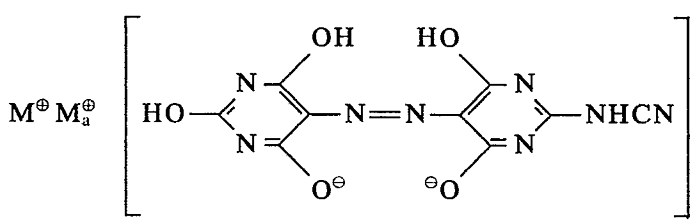

(V)

in der

$M^{\oplus}$ und $M_a^{\oplus}$ gleiche oder verschiedene Kationen bedeuten;

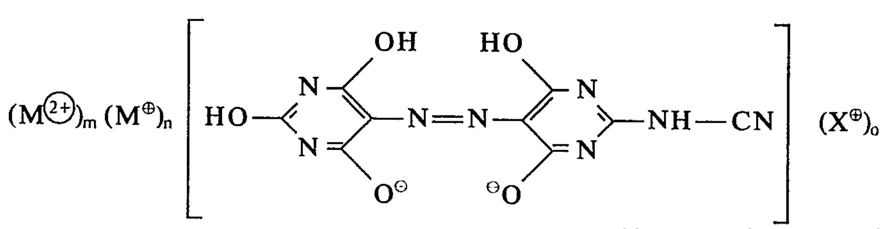

(VI)

in der $M^{2+}$ und $M^{\oplus}$ Kationen und $X^{\ominus}$ ein Anion bedeuten und in der folgenden Wertekombinationen m,

n, o möglich sind: m = 1, n = 0, o = 0; m = 2, n = 0, o = 2 sowie m = 1, n = 1, o = 1, wobei für den Fall, daß o = 2 ist, die beiden $X^{\ominus}$-Reste gleich oder verschieden sein oder auch einem zweiwertigen Anion angehören können;

$(M^{\oplus})_n$, $(M^{2+})_m$, $(M^{3+})_p$ 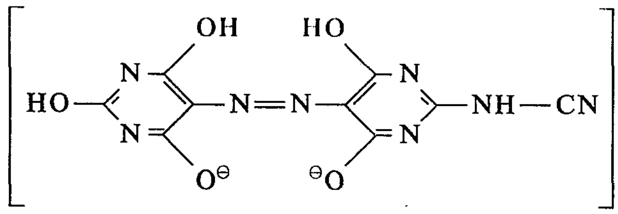 $(X^{\ominus})_{o'}$ (VII)

in der $M^{\oplus}$, $M^{2+}$, $M^{3+}$ Kationen und $X^{\ominus}$ ein Anion bezeichnen und in den folgenden Wertekombinationen n', m', p, o' möglich sind: n' = 0, m' = 0, p = 2, o' = 4; n' = 0, m' = 0, p = 1, o' = 1; n' = 1, m' = 0, p = 1, o' = 2 und n' = 0, m' = 1, p = 1, o' = 3, wobei für den Fall daß o' 1 ist, die $X^{\ominus}$-Reste gleich oder verschieden oder einem mehrwertigen Anion angehören können.

Als Kationen kommen bevorzugt $H^{\oplus}$ und/oder die Kationen ein-, zwei- und/oder dreiwertiger Metalle wie Li, Cs, Na, K, Mg, Ca, Sr, Ba, Zn, Cd, Fe, Co, Ni, Cu, Al, Cr, Mn, Sn, Pb in Frage, von denen K, Ca, Sr, Ba, Zn, Cd besonders bevorzugt sind.

Die anionischen Reste $X^{\ominus}$ leiten sich von organischen oder anorganischen Säuren wie Ameisensäure, Essigsäure, Bernsteinsäure, Weinsäure, Chlorwasserstoff, Bromwasserstoff, Jodwasserstoff, Fluorwasserstoff, Schwefelsäure, Phosphorsäure, Salpetersäure ab. Vorzugsweise steht $X^{\ominus}$ auch für das Mono- oder Dianion der Cyanimino-barbitursäure der Formel I.

Bevorzugt sind Salze der Formel I bzw. II, in denen $M^{\oplus}$ für $H^{\oplus}$ steht und $M_a^{\oplus}$ $K^{\oplus}$ bzw. $M^{2+}$ $Ba^{2+}$, $Ca^{2+}$, $Sr^{2+}$ oder $Ni^{2+}$ bezeichnen. Besondere Bedeutung kommt auch dem Nickelsalz der Formel

$Ni^{2+}$ 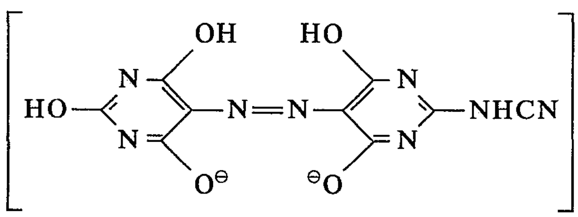 (VIII)

zu.

Besonders bevorzugt liegt den neuen Einschlußverbindungen, Interkalationsverbindungen und festen Lösungen ein Salz oder Komplex der Azobarbitursäure, insbesondere ein Cu-, Co- oder Ni-Salz oder Komplex zugrunde.

Ganz besonders bevorzugt handelt es sich um Einschlußverbindungen, Interkalationsverbindungen und feste Lösungen, bei denen der Azobarbitursäure-Nickel-1 : 1-Komplex, der in einer seiner tautomeren Formen die Struktur

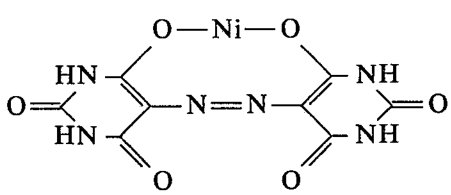 (IX)

hat, mindestens eine andere Verbindung eingeschlossen enthält.

Als Einschlußverbindungen, Interkalationsverbindungen und feste Lösungen dieses Typs kommen auch solche in Frage, bei denen eine metallhaltige Verbindung, z. B. ein Salz oder Metallkomplex in das Kristallgitter des Nickelkomplexes eingebaut ist. In diesem Fall kann in Formel IX ein Teil des Nickels durch andere Metallionen ersetzt sein oder es können weitere Metallionen in eine mehr oder weniger starke Wechselwirkung mit dem Nickelkomplex treten.

Der 1 : 1-Nickelkomplex ist charakterisiert durch vier Absorptionen im Doppelschwingungsbereich des IR-Spektrums, die meist auch in seiner Einschlußverbindungen, Interkalationsverbindungen und festen Lösungen gegebenenfalls mit kleinen Verschiebungen der Maxima in Erscheinung treten. Diese Absorptionsmaxima liegen (in KBr) bei 5,7 bis 5,9 $\mu$; 6,1 bis 6,4 $\mu$; 6,9 bis 7,1 $\mu$; 7,1 bis 7,3 $\mu$; wobei die letztgenannten Absorptionen auch zu einer einzigen Bande verschmelzen können. Diesen Absorptionen sind gegebenenfalls die Absorptionen der eingeschlossenen Stoffe überlagert.

Die festen Lösungen oder Einschlußverbindungen unterscheiden sich von einer Mischung der Komponenten dadurch, daß sie in mindestens einer physikalischen Eigenschaft von der Summe der Eigenschaften der Komponenten verschieden sind.

Wesentliche Unterschiede können z. B. bei den Lösungseigenschaften auftreten. So wird beispielsweise die Konzentration einer löslichen Substanz in einem Lösungsmittel erheblich niedriger sein, wenn sie nicht als reine Substanz, sondern als Komponente einer Einschlußverbindung, Interkalationsverbindung oder festen Lösung vorliegt.

Im Falle einer schwerlöslichen Substanz wird z. B. eine Menge an Lösungsmittel, die normalerweise ausreicht, diese Substanz vollständig zu lösen, im Falle der Einschlußverbindung, Interkalationsverbindung oder festen Lösung nicht zum Extrahieren ausreichen. Andererseits ist es denkbar, daß ein Lösungsmittel eine derartig starke Affinität zur eingeschlossenen Verbindung aufweist, daß es die darin gelöste Substanz mehr oder weniger vollständig verdrängen kann, wobei wiederum eine Einschlußverbindung entsteht.

Ein wesentliches Merkmal, in dem sich die erfindungsgemäßen festen Lösungen, Einschlußverbindungen oder Interkalationsverbindungen von einem Gemisch der Komponenten unterscheiden können, sind Röntgen-Pulverdiagramme, die nicht durch Addition der Diagramme der Einzelkomponente erhalten werden können. Im einfachsten Falle verändern sich die Intensitäten mehrerer Linien, in der Regel besteht jedoch nur noch eine geringe oder praktisch keine Ähnlichkeit mehr mit den Diagrammen der einzelnen Komponenten; nur falls eine Komponente im Überschuß vorhanden ist, werden dann ihre Linien neben denen der Einschlußverbindung erscheinen. Diese Unterscheidungsmerkmale zwischen einer festen Lösung, einer Interkalationsverbindung oder einer Einschlußverbindung und einer Mischung sind dem Fachmann bekannt und können der Literatur entnommen werden.

Verbindungen, die eingeschlossen sein können, entstammen den verschiedenartigsten Verbindungsklassen. Aus rein praktischen Gründen sind solche Verbindungen bevorzugt, die unter Normalbedingungen flüssig oder fest sind.

Von den flüssigen Substanzen sind wiederum solche bevorzugt, die einen Siedepunkt von 100°C oder darüber, bevorzugt von 150°C und darüber, aufweisen. Geeignete Verbindungen sind vorzugsweise acyclische und cyclische organische Verbindungen z. B. aliphatische und aromatische Kohlenwasserstoffe, die substituiert sein können, z. B. durch OH, COOH, $NH_2$, substituiertes $NH_2$, $CONH_2$, substituiertes $CONH_2$, $SO_2NH_2$, substituiertes $SO_2NH_2$, $SO_3H$, Halogen, $NO_2$, CN, $-SO_2-$Alkyl, $-SO_2-$Aryl, $-O-$Alkyl, $-O-$Aryl, $-O-$Acyl.

Im einzelnen seien z. B. genannt: Paraffine und Paraffinöle; Triisobutylen, Tetraisobutylen; Mischungen von aliphatischen und aromatischen Kohlenwasserstoffen, wie sie z. B. bei der Erdölfraktionierung anfallen; chlorierte Paraffinkohlenwasserstoffe wie Dodecylchlorid oder Stearylchlorid; $C_{10}-C_{30}$-Alkohle wie 1-Decanol, 1-Dodecanol, 1-Hexadecanol, 1-Octadecanol und ihre Mischungen, Oleinalkohol, 1,12-Octadecandiol, Fettsäuren und ihre Salze und Mischungen, z. B. Ameisensäure, Essigsäure, Dodecansäure, Hexadecansäure, Octadecansäure, Ölsäure, Fettsäureester, z. B. die Methylester der $C_{10}-C_{20}$-Fettsäuren, Fettsäureamide, wie Stearinsäureamid, Stearinsäuremonoethanolamid, Stearinsäurediethanolamid, Stearinsäurenitril, Fettamine, z. B. Dodecylamin, Cetylamin, Hexadecylamin, Octadecylamin und andere; Salze von Fettaminen mit Sulfon- und Carbonsäuren; isocyclische Kohlenwasserstoffe wie Cyclododecan, Decahydronaphthalin, o-, m-, p-Xylol, Mesitylen, Dodecylbenzolgemisch, Tetralin, Naphthalin, 1-Methylnaphthalin, 2-Methylnaphthalin, Biphenyl, Diphenylmethan, Acenaphthen, Fluoren, Anthracen, Phenanthren, m-, p-Terphenyl, o-, p-Dichlorbenzol, Nitrobenzol, 1-Chlornaphthalin, 2-Chlornaphthalin, 1-Nitronaphthalin, isocyclische Alkohole und Phenole und ihre Abkömmlinge wie Beznylalkohol, Decahydro-2-naphthol, Diphenylether, Sulfone, z. B. Diphenylsulfon, Methylphenylsulfon, 4,4'-Bis-2-(hydroxyethoxy)-diphenylsulfon; isocyclische Carbonsäuren und ihre Derivate wie Benzoesäure, 3-Nitrobenzoesäure, Zimtsäure, 1-Naphthalincarbonsäure, Phthalsäure, Phthalsäuredibutylester, Phthalsäuredioctylester, Tetrachlorphthalsäure, 2-Nitrobenzamid, 3-Nitrobenzamid, 4-Nitrobenzamid, 4-Chlorbenzamid, Sulfonsäuren, wie 2,5-Dichlorbenzolsulfonsäure, 3-Nitro-, 4-Nitro-benzolsulfonsäure, 2,4-Dimethylbenzolsulfonsäure, 1- und 2-Naphthalinsulfonsäure, 5-Nitro-1- und 5-Nitro-2-naphthalinsulfonsäure, Di-sec-butyl-naphthalinsulfonsäuregemisch, Biphenyl-4-sulfonsäure, 1,4-, 1,5-, 2,6-, 2,7-Naphthalindisulfonsäure, 3-Nitro-1,5-naphthalinsulfonsäure, Anthrachinonsulfonsäure-1, Anthrachinonsulfonsäure-2, Diphenyl-4,4'-disulfonsäure, 1,3,6-Naphthalintrisulfonsäure und die Salze dieser Sulfonsäuren z. B. die Natrium-, Kalium-, Calcium-, Zink-, Nickel- und Kupfersalze; Sulfonamide wie Benzolsulfonamid, 2-, 3- und 4-Nitrobenzolsulfonamid, 2-, 3- und 4-Chlorbenzolsulfonamid, 4-Methoxy-benzolsulfonamid, 3,3'-Sulfonylbisbenzolsulfonamid, 4,4'-Oxybisbenzolsulfonsäureamid, 1- und 2-Naphthalinsulfonsäureamid.

Carbonsäure- und Sulfonsäureamide sind eine bevorzugte Gruppe von einzuschließenden Verbindungen, insbesondere geeignet sind auch Harnstoff und substituierte Harnstoffe wie Phenylharnstoff, Dodecylharnstoff und andere; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Bevorzugte feste Lösungen, Interkalationsverbindungen oder Einschlußverbindungen enthalten grenzflächenaktive Verbindungen, insbesondere Tenside, die z. B. aus K. Lindner, Tenside-Textilhilfsmittel-Waschrohstoffe, 2. Auflage, Band I, Wissenschaftliche Verlagsgesellschaft mbH, Stuttart, 1964, bekannt sind. Dabei kann es sich um anionenaktive, nichtionogene oder kationenaktive Verbindungen sind z. B.: Echte Seifen, Salze der Aminocabonsäure, Salze niederer bzw. höherer acylierter Aminocarbonsäuren, Fettsäuresulfate, Sulfate von Fettsäureestern, -amiden usw., primäre Alkylsulfate, Sulfate

von Oxoalkoholen, sekundäre Alkylsulfate, Sulfate veresterter oder veretherter Polyoxyverbindungen, Sulfate substituierter Polyglykolether (sulfatierte Ethylenoxidaddukte), Sulfate acylierter oder alkylierter Alkanolamine, Sulfonate von Fettsäuren, ihren Estern, Amiden usw., primäre Alkylsulfonate, sekundäre Alkylsulfonate, Alkylsulfonate mit esterartig gebundenen Acylen, Alkyl- bzw. Alkylphenylethersulfonate, Sulfonate von Polycarbonsäureestern, Alkylbenzolsulfonate, Alkylnaphthalinsulfonate, fettaromatische Sulfonate, Alkylbenzimidazolsulfonate, Phosphate, Polyphosphate, Phosphonate, Posphinate, Thiosulfate, Hydrosulfite, Sulfinate, Persulfate. Geeignete nicht-ionogene Verbindungen sind z. B.: Ester und Ether von Polyalkoholen, Alkylpolyglykolether, Acylpolyglykolether, Alkylarylpolyglykolether, acylierte bzw. alkylierte Alkanolaminpolyglykolether. Geeignete kationenaktive Verbindungen sind z. B.: Alkylaminsalze, quaternäre Ammoniumsalze, Alkylpyridiniumsalze, einfache und quaternäre Imidazolinsalze, Alkyldiamine bzw. Alkylpolyamine, Acyldiamine bzw. Acylpolyamine, Acylalkanolamine, Alkanolaminester, Alkyl—$OCH_2$—N-pyridiniumsalze, Alkyl—CO—NH—$CH_2$—N-pyridiniumsalze, Alkylethylenharnstoffe, Sulfoniumverbindungen, Phosphoniumverbindungen, Arsoniumverbindungen, Alkylguanidine, Acylbiguanidide. Geeignete Ampholyte sind z. B.: Alkylbetaine, Sulfobetaine und Aminocarbonsäuren. Bevorzugt eingesetzt werden nicht-ionogene Tenside, insbesondere die Ethylenoxidadditionsprodukte von Fettalkoholen, Fettaminen sowie von Octyl- oder Nonylphenol.

Eine weitere wichtige Gruppe von Verbindungen die mit einer geeigneten Wirtsverbindung feste Lösungen, Einschlußverbindungen oder Interkalationsverbindungen bilden sind natürliche Harze und Harzsäuren wie z. B. Abietinsäure und ihre Umwandlungsprodukte und Salze. Solche Umwandlungsprodukte sind z. B. hydrierte, dehydrierte und disproportionierte Abietinsäuren. Diese können weiterhin dimerisiert, polymerisiert oder durch Addition von Maleinsäureanhydrid und Fumarsäure modifiziert sein. Von Interesse sind auch die an der Carboxylgruppe modifizierten Harzsäuren wie z. B. die Methyl-, Hydroxyethyl-, Glykol-, Glycerin- und Pentaerythritester, sowie Harzsäurenitrile und Harzsäureamine sowie Dehydroabietylalkohol.

Ebenfalls für eine Einlagerung geeignet sind Polymere, vorzugsweise wasserlösliche Polymere, z. B. Ethylen-Propylenoxid-Blockpolymere, Polyvinylalkohol, Poly-(meth)-acrylsäuren, modifizierte Cellulosen, wie Carboxymethylcellulosen, Hydroxyethyl- und -propylcellulosen, Methyl- und Ethylhydroxyethylcellulosen.

Ganz besonders wichtig sind Stoffe, bei denen ein Farbstoff oder Farbstoffgemische in das Molekülgerüst der organischen Metallverbindungen, besonders der Metallsalze oder -komplexe der Verbindungen I eingelagert sind, da sich dadurch besondere Effekte, wie z. B. höhere Farbstärke oder andere Farbtöne, erzielen lassen. Die Farbstoffe können zu den verschiedensten Farbstoffklassen gehören. In Frage kommen z. B. Azofarbstoffe, Anthrachinonfarbstoffe, Chinophthalonfarbstoffe, Azomethine, Phthaloxyaninfarbstoffe und Triphenylmethanfarbstoffe.

Besonders wichtig sind feste Lösungen, Interkalations- oder Einschlußverbindungen, bei denen Mono- oder Disazofarbstoffe mit 1—3 Sulfogruppen, insbesondere Kupplungsprodukte von Naphtholsulfonsäuren oder Naphthylaminsulfonsäuren eingelagert sind.

Die Menge an Substanz, die in das Kristallgitter der Metallverbindungen eingelagert werden kann, liegt in der Regel zwischen 5% und 120 Gew.-%, bezogen auf die Menge an Wirtsverbindung. Bevorzugt eingelagert werden zwischen etwa 10 und etwa 100 Gew.-%. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genannte Menge an Substanz zugesetzt werden, wobei man gegebenenfalls darauf verzichten kann, einen Überschuß auszuwaschen. Bevorzugt sind Mengen zwischen 10 und 150%.

Die Herstellung der Verbindungen gemäß Formel I kann so erfolgen, daß man ein in »5«-Stellung unsubstituiertes Pyrimidinderivat unter geeigneten Bedingungen mit einem 5-Diazo-pyrimidinderivat umsetzt, wobei die beiden Komponente so ausgewählt werden, daß sich ein der Formel I entsprechendes Substitutionsmuster ergibt.

Als Ausgangsprodukte geeignete 5-Diazo-pyrimidine sind literaturbekannt oder können nach literaturbekannten Verfahren hergestellt werden. Eine Zusammenstellung von Herstellungsverfahren gibt z. B. M. Regitz in S. Patai, »The Chemistry of Diazonium and Diazo-Groups«, Part 2, John Wiley & Sons, 1978, S. 751.

Bevorzugte Herstellungsverfahren sind z. B. die Umsetzung eines 5-Amino- oder 5-Sulfammino-pyrimidinderivates mit salpetriger Säure und die sogenannte Azogruppenübertragung, bei der eine Azogruppe von einem Arylsulfonylazid auf ein in 5-Stellung unsubstituiertes CH-acides Pyrimidinderivat übertragen wird. Als Ausgangsprodukte für diese Herstellungsverfahren eignen sich z. B. die folgenden Pyrimidinderivate:

Barbitursäure oder ihre Derivate wie

2-Amino-, 2-Cyanamino-, 2-Ureido-, 2-Acetylamino-, 2-Benzoylamino-, 2-Methylsulfonylamino-, 2-Guanidino-, 2-Phenylsulfonylamino-, 2-Anilino-, 2-(2-Chlor-anilino)-, 2-(3-Chloranilino)-, 2-(4-Chloranilino)-, 2-(3,4-Dichloranilino)-, 2-(2,5-Dichloranilino)-, 2-(2-Nitroanilino)-, 2-(3-Nitroanilino)-, 2-(4-Nitroanilino)-, 2-(2-Methoxyanilino)-, 2-(4-Methoxyanilino), 2-(2-Methylanilino)-, 2-(4-Methylanilino)-, 2-(2,4-Dimethylanilino)-, 2-Benzylamino-,

2-Methylamino-, 2-Dimethylamino-, 2-Methyl-, 2-Butyl-, 2-Ethyl-, 2-Propyl-, 2-Hexyl-, 2-Benzyl- und 2-Phenyl-4,6-dihydroxypyrimidin; 4,6-Dihydroxypyrimidin; 1-Methyl-, 1-Ethyl-, 1-Benzyl-, 1-Phenyl-, 1-(4-Chlorphenyl)-, 1-(2-Chlorphenyl)-, 1-(3,4-Dichlorphenyl)-, 1-(4-Methylphenyl)-, 1-(2,4-Dimethylphenyl)- und 1-(3-Nitrophenyl)-barbitursäure; Uracil; 4-Benzyl-, 4-Ethyl-, 4-Methyl- und 4-Phenyl-2,6-dihydroxypyrimidin.

Die aus diesen oder ähnlichen Pyrimidinderivaten z. B. durch Azogruppenübertragung oder auf andere Weise zugänglichen 5-Diazopyrimidine können unter geeigneten Bedingungen mit in 5-Stellung unsubstituierten CH-aciden Pyrimidinderivaten umgesetzt werden zu Derivaten der Azobarbitursäure. Als für eine derartige Kupplungsreaktion geeignete in 5-Stellung unsubstituierte Pyrimidinderivate kommen die gleichen in Frage, die auch als Ausgangsprodukte für die Herstellung von 5-Diazopyrimidin dienen können. Zusätzlich können z. B. noch ausgeführt werden:

4-Amino-2,6-dihydroxypyrimidin, 2,4-Diamino-6-hydroxypyrimidin, 4,6-Diamino-2-hydroxypyrimidin, 4-Amino-2-cyanamino-6-hydroxypyrimidin, 2-Phenyl-4-amino-6-hydroxypyrimidin, Cytosin, Orotsäure, 4-Carbamoyl-2,6-dihydroxypyrimidin, 4-Carboxy-6-hydroxy-2-phenyl-pyrimidin, 7-Hydroxy-5-methyl-s-triazolo[1,5-a]pyrimidin, 2,5-Dimethyl-7-hydroxy-s-triazolo[1,5-a]pyrimidin; 5,7-Dihydroxy-s-triazolo[1,5-a]pyrimidin, 5,7-Dihydroxy-2-methyl-s-triazolo[1,5-a]pyrimidin, 7-Amino-5-hydroxy-s-triazolo[1,5-a]pyrimidin, 7-Amino-5-hydroxy-2-methyl-s-triazolo[1,5-a]pyrimidin, 2,4-Dihydroxy-pyrimidin[1,2-a]benzimidazol, 4-Amino-2-hydroxy-pyrimido[1,2-a]benzimidazol, 2H-Pyrimido[2,1-b]benzothiazol-2,4-(3H)-dion.

Alle genannten Pyrimidinderivate können einzeln oder als Mischungen eingesetzt werden.

Die Kupplungsreaktion kann auf verschiedene Weise durchgeführt werden. So kann man z. B. die 5-Diazopyrimidine nach ihrer Herstellung zunächst isolieren und gegebenenfalls durch Umkristallisieren oder Umfällen reinigen. Ein bevorzugtes Verfahren besteht jedoch darin, die bei der sogenannten Azogruppenübertragung entstehenden 5-Diazopyrimidine ohne Zwischenisolierung unmittelbar weiter umzusetzen.

Die Kupplungsreaktion wird bevorzugt in einem wasserhaltigen Milieu in einem schwach sauren bis schwach alkalischen pH-Bereich, d. h. zwischen pH ca. 2 und pH ca 12, ausgeführt.

Weist das 5-Diazopyrimidin in einer seiner tautomeren Formen an einem seiner Ringstickstoffatome noch ein Wasserstoffatom auf, so kann die dadurch bedingte NH-Acidität dazu führen, daß das Diazopyrimidin im neutralen bis alkalischen Bereich in das weniger reaktionsfähige Anion übergeht. In diesem Fall wählt man den pH-Bereich zweckmäßigerweise so, daß das Diazopyrimidin ganz oder teilweise in seiner undissozierten Form vorliegt. Andererseits reagieren die als Kupplungskomponenten dienenden, in 5-Stellung unsubstituierten Pyrimidinderivate dann besonders rasch, wenn diese ganz oder teilweise als Anion vorliegen. Hieraus ergibt sich, daß häufig die maximale Reaktionsgeschwindigkeit in einem bestimmten, von Fall zu Fall verschiedenen pH-Bereich liegen wird, den man gegebenenfalls durch Vorversuche ermitteln kann.

Je nach Art der Komponenten und dem pH-Wert kann die Reaktionsdauer zwischen ca. einer und 24 Stunden oder noch länger und die Reaktionstemperatur zwischen 20° und 100°C gewählt werden. Es kann auch zweckmäßig sein, bei erhöhter Temperatur und unter Druck zu arbeiten.

Die bei der Reaktion entstehenden Derivate der Azobarbitursäure sind schwache bis starke Säuren, die mit geeigneten Kationen Salze oder Komplexe bilden, die sich von den Mono-, Di-, Tri- oder Tetraanionen herleiten können.

Bevorzugte geeignete Kationen sind z. B. die Kationen der Alkali und Erdalkalimetalle wie die von Lithium, Natrium, Kalium, Magnesium, Calcium, Strontium und Barium, weiterhin Kationen von Eisen, Kobalt, Nickel, Cadmium, Mangan, Zink, Aluminium, Chrom, Kupfer.

Die Salze oder Komplexe können auf verschiedenen Wegen hergestellt werden. Sind z. B. während der Kupplungsreaktion geeignete Metallsalze zugegen, so können unmittelbar die Salze oder Komplexe der Azobarbitursäuren entstehen, die sich in Abhängigkeit vom pH-Wert von den verschiedenen Dissoziationsstufen der Azobarbitursäuren herleiten können. Man kann aber auch zuerst kuppeln und dann das Reaktionsprodukt unmittelbar oder aber gegebenenfalls nach Zwischenisolieren und Wiederanschlämmen in einem geeigneten Lösungsmittel umsetzen. Bei der Kupplungsreaktion können in Abhängigkeit von der Art der Komponenten und dem pH-Wert entweder die undissozierten Azobarbitursäuren oder aber bereits Salze, z. B. Alkalisalze, entstehen, die dann in einer doppelten Umsetzung mit Metallsalzen umgesetzt werden können.

Die Salz- oder Komplexbildung wird bevorzugt in einem wasserhaltigen Milieu durchgeführt, wobei die pH-Werte je nach Art der Komponenten zwischen mineralsauer und alkalisch liegen müssen. Die Reaktionstemperatur kann zwischen 0° und 100°C betragen, bevorzugt 30° —100°C; die Reaktionszeiten zwischen einigen Stunden bei tiefen und einigen Minuten bei hohen Temperaturen. Darüber hinaus kann es zum Erzielen besonders günstiger anwendungstechnischer Eigenschaften nützlich sein, das Produkt länger als für die zur Salz- oder Komplexbildung erforderliche Zeit zu erhitzen, gegebenenfalls auch unter Druck auf höhere Temperaturen.

Setzt man bei der Salz- bzw. Komplexbildung Mischungen von Metallsalzen ein, so können je nach den Bedingungen auch gemischte Salze oder Komplexe entstehen.

Die Bildung von Einschlußverbindungen, Interkalationsverbindungen oder festen Lösungen, bei denen zusätzliche Substanzen in den Moleküsverband eingelagert sind, kann so erfolgen, daß man vor, während oder nach der Komplexbildung die einzulagernde Substanz oder das Substanzgemisch in geeigneter Form zu der Reaktionsmischung hinzufügt und zwischen einigen Minuten und bis zu ca. 24 Stunden auf Temperaturen zwischen 30 und 100° C erhitzt.

Vor allem bei schwer löslichen Substanzen kann es auch hier zweckmäßig sein, bei erhöhten Temperaturen und unter Druck zu arbeiten. Man kann jedoch den Komplex auch isolieren und den Preßkuchen oder die getrocknete Substanz in einem geeigneten Lösungsmittel anschlämmen und danach in gleicher Weise die gewünschte Substanz einlagern.

Die einzulagernden Substanzen können je nach Art und Konsistenz als Festsubstanzen, Flüssigkeiten, Lösungen, Anschlämmungen, Suspensionen, Dispersionen oder Emulsionen zugefügt werden.

Die Herstellung der Cyaniminoazobarbitursäure bzw. ihrer Salze und Komplexe kann auf verschiedenen Wegen erfolgen.

1. Diazobarbitursäure wird im schwach sauren bis neutralen pH-Bereich auf 2-Cyaniminobarbitursäure gekuppelt. Zur Herstellung der erfindungsgemäßen Salze werden vor, während oder nach der Kupplungsreaktion geeignete, zur doppelten Umsetzung befähigte Salze eingesetzt.
2. 2-Cyanimino-5-diazobarbitursäure wird im neutralen bis schwach sauren pH-Bereich auf Barbitursäure gekuppelt. Durch Zugabe von Salzen, die zur doppelten Umsetzung befähigt sind, vor, während oder nach der Kupplungsreaktion lassen sich die erfindungsgemäßen Salze herstellen.
3. Barbitursäure und 2-Cyaniminobarbitursäure werden vorgelegt und bei pH 4—8 mit einem azogruppenübertragenden Agens aufeinander gekuppelt. Zur Herstellung der erfindungsgemäßen Salze werden vor, während oder nach der Reaktion geeignete, zur doppelten Umsetzung befähigte Salze eingesetzt.

Die unter 1.—3. beschriebenen Verfahren sowie allgemein die im Vorhergehenden beschriebenen Verfahren zur Herstellung von Azobarbitursäuren sowie ihrer Salze, Komplexe, festen Lösungen, Einschlußverbindungen und Interkalationsverbindungen können in wäßrigen, wäßrig-organischen oder organischen Medien, vorzugsweise bei Temperaturen von 20—150°C, besonders bevorzugt 50—100° C durchgeführt werden.

Vorteilhaft können die beschriebenen Herstellungsverfahren auch in Gegenwart nicht-ionischer, anionischer, kationischer oder ampholytischer, oberflächenaktiver Verbindungen durchgeführt werden.

Geeignete nicht-ionische Dispergiermittel sind z. B. nicht-ionische Umsetzungsprodukte von Ethylenoxid mit Fettalkoholen oder Nonylphenol. Geeignete anionische oberflächenaktive Verbindungen sind in K. Lindner, Tenside-Textilhilfsmittel-Waschrohstoffe, 2. Auflage, Wiss. Verlagsgesellschaft, Stuttgart, 1964, Band I, S. 571—836, oder in Ullmanns Encyklopädie der technischen Chemie, 4. Auflage, Verlag Chemie, Weinheim/Bergstr., 1975, Band 10, S. 457—458, beschrieben.

Besonders geeignet sind solche, die aus den folgenden Stoffklassen stammen: Fettsäuresalze, -sulfate, Sulfate von Fettsäureestern und -amiden, Alkylsulfate, Sulfate von alkoxylierten Alkoholen, Sulfate von acylierten Alkanolaminen, langkettige Alkylsulfonate ($C_6$—$C_{20}$), Fettsäureestersulfonate, Fettsäureamidsulfonate, Sulfobernsteinsäureester und -amide, ($C_6$—$C_{20}$-Alkyl)-acyltauride, perfluorierte Alkylsulfonate, Alkylbenzolsulfonate (z. B. vom Typ »Marlon«), Alkylnaphthalinsulfonate, Arylethersulfonate, Alkylbenzimidazolsulfonate, Alkoxycarboxylate, Alkylmalonsäuresalze, Alkylbernsteinsäuresalze, Seifen.

Geeignete kationische oder ampholytische oberflächenaktive Verbindungen gehören beispielsweise folgenden Stoffklassen an: Fettaminsalze, quartäre Alkylammoniumsalze (Typ »Hyamin«), Alkylbenzoylammoniumsalze (Typ »Zephirol«), Alkanolaminsalze von Ethern oder Estern, Alkylpyridiniumsalze oder Eiweißampholyte, substituierte Betaine und Sulfobetaine vom Typ »Tego Betain«, substituierte Aminocarbonsäuren. Auf diese Weise lassen sich Pigmentpräparationen herstellen, die 0,01—30 Gew.-%, bezogen auf das Gewicht der Azobarbitursäure-Verbindung, vorzugsweise 1—10 Gew.-%, an oberflächenaktiver Verbindung enthalten.

Bei den oben beschriebenen Umsetzungen kann man sowohl im wäßrigen Medium oder auch in wäßrig-organischen oder organischen Medien arbeiten. Geeignete organische Lösungsmittel, die vorhanden sein können, sind z. B.:

Formamid, N-Methylformamid, N,N-Dimethylformamid, Acetamide, Phosphorsäureamide, Dioxan, Aceton, Pyridin und seine Derivate wie die Picoline, Lutidine und Collidin, ein- oder mehrwertige Alkohole wie Methanol, Ethanol, Isobutanol, Ethylenglykol und organische Säuren wie Ameisensäure und Essigsäure; bevorzugt werden also mit Wasser ganz oder teilweise mischbare Lösungsmittel oder Gemische dieser Lösungsmittel eingesetzt.

Geeignete Metallsalze zur Herstellung der Salze und Komplexe der Azobarbitursäuren sind beispielsweise: Natriumchlorid, Kaliumchlorid, Lithiumchlorid, Lithiumcarbonat, Cäsiumchlorid, Natriumnitrit, Kaliumnitrat, Lithiumhydroxid, Natriumsulfat, Kaliumphosphat, Magnesiumchlorid, Magnesiumsulfat, Calciumchlorid, Calciumacetat, Calciumformiat, Bariumchlorid, Bariumnitrat, Bariumacetat, Bariumcarbonat, Strontiumnitrat, Manganchlorid, Mangansulfat, Eisen-(III)-chlorid, Eisen-(III)-nitrat, Eisen-(II)-sulfat, Cobaltchlorid, Cobaltnitrat, Cobaltsulfat, Aluminiumsulfat, Aluminiumnitrat, Chrom-(III)-sulfat, Chrom-(III)-nitrat, Zinkchlorid, Zinksulfat, Zinkacetat, Cadmiumchlorid, Cadmiumsulfat, Cadmiumnitrat, Kupfer-(II)-sulfat, Kupfer-(II)-chlorid, Kupfer-(II)-acetat und Kupfer-(II)-formiat, Nickelchlorid, Nickelsulfat, Nickelnitrat, Nickelacetat, Nickelformiat.

Man kann auch Mischungen dieser Salze, die verschiedene der genannten Metalle enthalten können, verwenden. Die Verwendung von solchen Salzmischungen empfiehlt sich insbesondere für die Erzielung von Zwischentönen der farbigen Endprodukte.

Geeignete azogruppenübertragende Agentien sind Verbindungen der Formel

$$R{-}N_3 \qquad (VI)$$

in der

R für einen Acylrest wie $-CONH_2$, $-CO-NH-$Alkyl, $-CON-$(Alkyl)$_2$, $-COOR_1$, $R_2-SO_2-$ oder einen heterocyclischen Rest steht. $R_1$ bedeutet dabei Alkyl-, Aralkyl- oder Arylreste, $R_2$ steht für Aminogruppen, Alkyl-, Aralkyl-, Aryl- oder heterocyclische Reste. Erfindungsgemäß werden unter Alkylresten geradkettige und verzweigtkettige, substituierte und unsubstituierte Alkylreste verstanden. Die Aminogruppen können beliebig substituiert sein.

Für die Synthese geeignete Azide sind beispielsweise Carbamylazid, Azidoameisensäuremethylester, Azidoameisensäureethylester, Dimethylaminosulfonsäureazid, Methylsulfonsäureazid, Benzylsulfonsäureazid, Bezolsulfonsäureazid, o-Toluolsulfonsäureazid, m-Toluolsulfonsäureazid, p-Toluolsulfonsäureazid, 3-Nitrobenzolsulfonsäureazid, 2-Chlorbenzolsulfonsäureazid, 4-Chlorbenzolsulfonsäureazid und 2-Azido-3-ethylbenzthiazolium-tetrafluoroborat.

Die Herstellung von 2-Cyaniminobarbitursäure ist beispielsweise aus der DE-PS 158 591 (Friedländer, P. (Hrg.): Fortschritte der Teerfabrikation und verwandter Industriezweige, Band 7, S. 633, Berlin: J. Springer 1905) bekannt.

Zur Herstellung von 2-Cyanimino-5-diazobarbitursäure in Form des Diazoniumsalzes verfährt man in analoger Weise wie bei der Herstellung von Diazobarbitursäure (s. z. B. M. Regitz, Liebigs Ann. Chem. 676, 101 (1964)).

Die beschriebenen Verfahren führen in guten Ausbeuten und in hoher Reinheit zu den Verbindungen.

Die Metallacke der Azobarbitursäuren enthalten je nach den Herstellungsbedingungen wechselnde Mengen an Kristallwasser. Es werden 0—6, in der Regel 2—4 Moleküle Wasser pro Summenformel gefunden.

Die Herstellung einiger Metallsalze und Metallkomplexe der Azobarbitursäure ist aus der DE-AS 2 064 093 bekannt.

Auch der Nickelkomplex der Azobarbitursäure, seine festen Lösungen, Einschluß- und Interkalationsverbindungen können auf verschiedenen Wegen hergestellt werden. Eine bevorzugte Verfahrensweise kann durch das folgende vereinfachte Formelschema wiedergegeben werden, wobei viele Varianten möglich sind:

1. 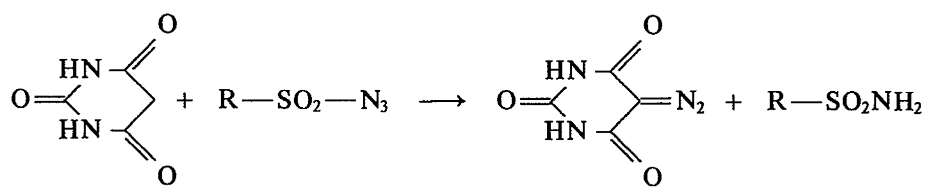 (X)

2. 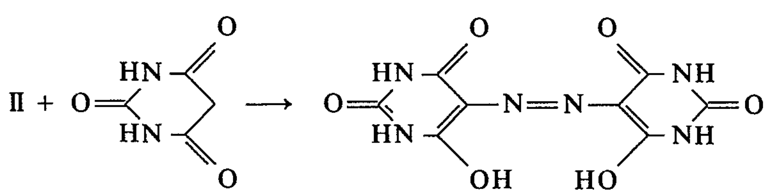 (XI)

3. 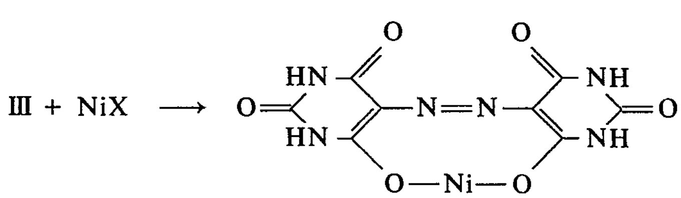 (IX)

R steht hierbei für einen gegebenenfalls substituierten Arylrest, NiX für ein bevorzugt wasserlösliches Nickelsalz.

In einem ersten Reaktionsschritt wird auf eine an sich bekannte Weise eine Azogruppe von einem Arylsulfonsäureazid auf Barbitursäure übertragen unter Bildung von Diazobarbitursäure (X) und Arylsulfonamid. Diese Azogruppenübertragung wird bevorzugt in einem wasserhaltigen Milieu bei einer Temperatur zwischen 10 und 100°C, bevorzugt zwischen 30 und 80°C, durchgeführt, wobei man sowohl im sauren als auch im alkalischen Bereich, d.h. zwischen pH ca. 2 und 14 arbeiten kann. Für diese Reaktion geeignete Sulfoylazide sind z. B. Bezolsulfonylazid, 2-, 3- oder 4-Chlorbenzolsulfonylazid, o-, m-, p-Toluolsulfonylazid, 4-Methoxybenzolsulfonylazid, 3-Nitro-bezolsulfonylazid, 3,3'-Sulfonylbisbenzolsulfonylazid, 4,4'-Oxybisbenzolsulfonylazid, 2,7-Dibenzofurandisulfonylazid, 1-Naphthalinsulfonylazid, 2-Naphthalinsulfonylazid.

In einem zweiten Reaktionsschritt kuppelt dann die Diazobarbitursäure (X) mit einem weiteren Molekül Barbitursäure Azobarbitursäure (XI). Diese Kupplung kann unter den gleichen Bedingungen durchgeführt werden wie die Azogruppenübertragung, jedoch wählt man zweckmäßigerweise einen sauren bis neutralen pH-Bereich, d. h. pH-Werte von ca. 2 bis 7, da die Diazobarbitursäure bei pH-Werten von ≧ 5,5 bis 6 an mit Basen weniger reaktive Salze bildet. Man kann dieses Verhalten der Diazobarbitursäure auch dazu ausnützen, die beiden Reaktionsschritte teilweise oder vollständig zu trennen, indem man z. B. zunächst bei einem pH-Wert von ≧ 7 die Azogruppe teilweise oder vollständig überträgt und anschließend bei einem pH-Wert zwischen ca. 2 bis 6 kuppelt. Die Diazobarbitursäure kann auch zwischenisoliert werden, indem man z. B. Barbitursäure, gegebenenfalls mit einem geringen Überschuß von ca. 1 bis 10% an Sulfonylazid, in neutralem bis alkalischem Bereich zu einem Salz der Diazobarbitursäure umsetzt und dieses nach Auskristallisieren oder Aussalzen oder aber nach Ansäuern die freie Diazobarbitursäure isoliert. Als auf diese Weise isolierbare Salze der Azobarbitursäure kommen z. B. Alkalisalze, z. B. Lithium-, Natrium-, Kaliumsalze, Erdalkalisalze, z. B. Magnesium-, Calcium-, Strontium-, Bariumsalze oder die Salze des Nickels, Zinks oder Mangans in Frage. Arbeitet man dagegen von Anfang an in einem sauren bis neutralen Bereich, so werden Azogruppenübertragungen und Kupplung gleichzeitig ablaufen, und man erhält unmittelbar die Azobarbitursäure.

Die Azobarbitursäure ist eine starke Säure und fällt in den genannten pH-Bereichen stets in Form ihrer Salze oder Metallkomplexe an. Dabei kann sie je nach pH-Wert oder Art der vorhandenen Kationen als ein- oder zweibasische Säure wirken. So können Salze bzw. Komplexe z. B. mit den Kationen des Natriums, Kaliums, Magnesiums, Calciums, Strontiums, Bariums, Zinks, Mangans, Eisens, Cadmiums, Ammoniums u. a. erhalten werden. Verwendet man z. B. zum Abpuffern der Säure während den Reaktionsstufen 1 und 2 Verbindungen oder Salze des Natriums, so wird man das Mononatriumsalz der Azobarbitursäure erhalten. Setzt man vor, während oder nach diesen Reaktionsschritten Salze oder Verbindungen mit anderen Kationen zu, so entstehen in Abhängigkeit von den eingesetzten Mengen der Reaktionstemperatur, der Reaktionsdauer und dem pH-Wert Salze oder Komplexe oder Mischungen von Salzen oder Komplexen mit anderen Kationen.

Diese Salze oder Komplexe der Azobarbitursäure können zwischenisoliert werden. Eine Zwischenisolierung an dieser Stelle oder eine Zwischenisolierung der Diazobarbitursäure kann u. U. vorteilhaft sein, da man auf diese Weise Verunreinigungen oder Nebenprodukte, z. B. die bei der Azogruppenübertragung entstehenden Sulfonamide entfernen kann, da diese sonst evtl. in Konkurrenz mit anderen zugesetzten Substanzen ebenfalls feste Lösungen bilden können. Die Sulfonamide können z. B. durch Umkristallisieren, Erhitzen und Waschen mit geeigneten Lösungsmitteln, z. B. Wasser, Methanol oder Ethanol, oder aber durch Überführen in wasserlösliche Salze und anschließendes Auswaschen entfernt werden.

Die Bildung des Nickelkomplexes der Azobarbitursäure in einem dritten Reaktionsschritt kann auf verschiedene Weise durchgeführt werden. So kann man z. B. Kupplung und Komplexbildung in der Weise zusammenfassen, daß man vor oder während der Kupplungsreaktion ein festes oder gelöstes Nickelsalz zusetzt, wobei Kupplung und Komplexbildung praktisch gleichzeitig ablaufen und die Bedingungen im wesentlichen die gleichen sind, wie bei einer alleinigen Kupplung. Der Nickelkomplex bildet sich so besonders rasch und glatt. Man kann aber auch von einem fertigen Salz der Azobarbitursäure ausgehen und dieses mit einem Nickelsalz umsetzen. Im einfachsten Fall kann man von einer Suspension eines Salzes oder Komplexes der Azobarbitursäure ausgehen, wie sie bei der Kupplungsreaktion in der bereits beschriebenen Weise entsteht, oder aber man isoliert ein derartiges Salz durch Absaugen, Abpressen oder Zentrifugieren, schlämmt den Preßkuchen oder das nach Trocknen und gegebenenfalls Mahlen entstehende Produkt gegebenenfalls unter Zusatz eines Dispergier- oder Netzmittels in einem geeigneten Lösungsmittel an und setzt mit einem Nickelsalz um. Geeignete Nickelsalze sind z. B. die Chloride, Sulfate oder Nitrate des Nickels sowie Nickelacetat, -formiat, -oxalat und -carbonat. Die Komplexbildung wird bevorzugt in einem wasserhaltigen Milieu durchgeführt. Der pH-Wert kann zwischen mineralsauer und stark alkalisch liegen, bevorzugt bei ≦ 10. Bevorzugte Reaktionstemperaturen sind 30 bis 100°C, wobei die Reaktion gegebenenfalls auch bei erhöhten Temperaturen unter Druck durchgeführt werden kann. Die erforderlichen Reaktionszeiten schwanken zwischen einigen Stunden bei tiefen und einigen Minuten bei höheren Temperaturen. Zur Erzielung guter Pigmenteigenschaften kann es darüber hinaus zweckmäßig sein, länger als für die zur Komplexbildung erforderliche Zeit zu erhitzen, gegebenenfalls auch bei erhöhter Temperatur unter Druck.

Die Bildung von festen Lösungen, Einschluß- und Interkalationsverbindungen bei denen zusätzliche Substanzen in den Molekülverband des Nickelkomplexes eingelagert sind, kann so erfolgen, daß man vor, während oder nach der Komplexbildung die einzulagernde Substanz oder das Substanzgemisch in geeigneter Form zu der Reaktionsmischung hinzufügt und zwischen einigen Minuten und bis zu ca. 24 Stunden auf Temperaturen zwischen 30 und 100° C erhitzt. Vor allem bei schwer löslichen Substanzen kann es auch hier zweckmäßig sein, bei erhöhten Temperaturen und unter Druck zu arbeiten. Man kann jedoch den Nickelkomplex auch isolieren und den Preßkuchen oder die getrocknete Substanz in einem geeigneten Lösungsmittel anschlämmen und danach in gleicher Weise die gewünschte Substanz einlagern.

Die einzulagernden Substanzen können je nach Art und Konsistenz als Festsubstanzen, Flüssigkeiten, Lösungen, Anschlämmungen, Suspensionen, Dispersionen oder Emulsionen zugefügt werden.

Bevorzugtes Reaktionsmedium für alle Reaktionsstufen ist Wasser. Es kann zweckmäßig sein, zusätzlich ein mit Wasser ganz oder teilweise mischbares Lösungsmittel zuzufügen. Hierdurch kann z. B. die Löslichkeit der Komponenten erhöht und dadurch die Reaktion gefördert werden und es können dadurch Pigmenteigenschaften wie z. B. die Dispergierbarkeit, verbessert werden. Solche Lösungsmittel sind z. B. Methanol, Ethanol, Propylalkohol, Isopropylalkohol, n-Butanol, Isobutanol, Aceton, Methylethylketon, Cyclohexanon, Glykol, Methylglykol, Ethylglykol, Butylglykol, Glykoldimethylether, Diglykol, Diglykoldimethylether, Diglykoldiethylether, Dioxan, Dimethylformamid, Dimethylsulfoxid, Sulfolan, N-Methylpyrrolidon, Pyridin u. a.

Ein ähnlicher Effekt kann dadurch erzielt werden, daß man ein mit Wasser nicht oder nur wenig mischbares Lösungsmittel zugibt, gegebenenfalls zusammen mit einem geeigneten Emulgator. Solche Lösungsmittel sind z. B. Toluol, Xylol, Chlorbenzol, Dichlorbenzol, Nitrobenzol, Chloroform, Methylenchlorid.

Alle oder auch einzelne der Teilreaktionen können auch ganz in organischen Lösungsmitteln durchgeführt werden, wofür die bereits genannten mit Wasser mischbaren oder nicht mischbaren Lösungsmittel in Frage kommen.

Die neuen Einschlußverbindungen, Interkalationsverbindung und festen Lösungen eignen sich hervorragend als Pigmente für alle Pigmentanwendungszwecke.

Zum Beispiel eignen sie sich zum Pigmentieren von Lacken aller Art für die Herstellung von Druckfarben, Leimfarben oder Binderfarben, für die Massefärbung von synthetischen, halbsynthetischen oder natürlichen makromolekularen Stoffen, wie z. B. Polyvinylchlorid, Polystyrol, Polyamid, Polyethylen oder Polypropylen. Sie können auch für die Spinnfärbung von natürlichen, regenrierten oder künstlichen Fasern, wie z. B. Cellulose-, Poylester-, Polycarbonat-, Polyacrylnitril- oder Polyamidfasern, sowie zum Bedrucken von Textilien und Papier verwendet werden. Aus diesen Pigmenten können feinteilige, stabile wäßrige Pigmentdispersionen, die beispielsweise für die Pigmentierung von Dispersions- und Anstrichfarben, für die Papierfärbung, für den Pigmentdruck von Textilien oder für die Spinnfärbung von Viskose brauchbar sind, durch Mahlen oder Kneten in Gegenwart von nicht-ionogenen, anionischen oder kationischen Tensiden hergestellt werden.

Die neuen Verbindungen bzw. festen Lösungen zeichnen sich vor allem durch eine hervorragende thermische Stabilität ausgezeichnete Licht- und Wetterechtheiten und hervorragende Lösungsmittelechtheiten aus. Durch die Herstellung fester Lösungen oder Einschlußverbindungen können gezielt Pigmenteigenschaften wie Dispergierbarkeit, Glanz, Brillanz, Farbton u. a. beeinflußt werden.

In den folgenden Beispielen sind die Temperaturen in ° C angegeben.

Bei den Röntgenbeugungsspektren handelt es sich um Debye-Scherrer-Aufnahmen (Cu-$K_{\alpha}$-Strahlung, $\lambda(K_{\alpha}) = 1{,}5418$ Å, Ni-Filter). Angegeben sind die d-Werte in Å und in Klammern die geschätzten Intensitäten, wobei die größte Intensität gleich 100 gesetzt ist. Aufgeführt sind sämtliche Linien bis zu einer realtiven Intensität von 10. Diffuse Banden sind durch ein d gekennzeichnet.

## Beispiel 1

a) 25 g Benzolsulfonsäurehydrazid, 200 ml Wasser, 20 ml 10 N Salzsäure und 1,25 g eines Kondensationsproduktes von Stearinsäure mit Taurin werden 30 Minuten verrührt. Man fügt 60 g Eis hinzu und tropft anschließend in ca. 30 Minuten 34 ml einer wäßrigen Natriumnitritlösung mit einem Gehalt von 30 g Natriumnitrit in 100 ml Lösung hinzu. Der Ansatz wird 30 Minuten gerührt, wobei man einen Nitritüberschuß aufrechterhält. Anschließend zerstört man den Nitritüberschuß mit wenig Aminosulfonsäure und neutralisiert mit ca. 5 ml 10 N Natronlauge. Man erhält eine Emulsion von Bezolsulfonsäureazid.

b) Zu einer nach 1a) hergestellten Emulsion gibt man 38,2 g Barbitursäure, verrührt 10 Minuten und stellt dann mit ca. 33 ml 10 N Natronlauge auf pH 8. Der Ansatz wird 2 Stunden bei 50° C gerührt, danach mit 3 ml Essigsäure und ca. 14 ml 10 N Salzsäure auf pH 4,8 gestellt und noch 1 Stunde auf 70° C und 3 Stunden auf 80° C erhitzt. Man erhält eine Suspension des Natriumsalzes der Azobarbitursäure; zusätzlich sind noch ca. 22 g des als Nebenprodukt entstehenden Benzolsulfonamids gelöst vorhanden.

c) Eine nach 1b) hergestellte Suspension wird auf 95° C bis 100° C aufgeheizt, abgesaugt und mit ca.

1 l siedend heißem Wasser in mehreren Portionen gewaschen. Man erhält einen Preßkuchen des Natriumsalzes der Azobarbitursäure.

d) Eine nach 1c) hergestellte Paste wird mit 500 ml Wasser angerührt, auf 95°C aufgeheizt und innerhalb von 5 Minuten wird eine Lösung von 34,5 g $NiCl_2 \cdot 6\ H_2O$ in 120 ml Wasser zugetropft. Erhitzt man weitere 4 Stunden auf 95°C, saugt ab, wäscht in mehreren Portionen mit 1 l siedend heißem Wasser und trocknet im Umluftschrank bei 70°C, so erhält man 47,7 g des 1 : 1-Nickelkomplexes der Azobarbitursäure.

Analyse:
22,9% N; 15,6% Ni

IR-Spektrum (in KBr): 5,85 μ, 6,35 μ, 7,0 μ, 7,2 μ.
Röntgenbeugungsspektrum: 7,92 (100), 5,08 (20), 4,47 (20d), 3,84 (15), 3,46 (20), 3,21 (10), 2,974 (10).

Das Produkt färbt Einbrennlacke in gelben Tönen.

## Beispiel 2

Verfährt man wie bei Beispiel 1, führt aber die Komplexbildung bei 70°C statt bei 95°C durch, hält anschließend noch 1 Stunde bei 70°C und 3 Stunden bei 95°C, so erhält man ein farbstärkeres Produkt mit im übrigen ähnlichen Eigenschaften wie bei Beispiel 1.

## Beispiele 3 bis 5

Rührt man eine nach 1c) hergestellte Paste mit 500 ml Wasser an, gibt 10 g, 20 g oder 30 g eines handelsüblichen Additionsproduktes von 5 Mol Ethylenoxid an ein Fettalkoholgemisch mit einer durchschnittlichen Kettenlänge von 12 Kohlenstoffatomen hinzu, erhitzt auf 90°C, tropft in ca. 5 Minuten eine Lösung von 34,5 g $NiCl_2 \cdot 6\ H_2O$ und 13 g wasserfreiem Natriumacetat in 120 ml Wasser zu und verfährt im übrigen wie bei Versuch 1d), so erhält man 59,3 g, 67,8 g und 80,7 g eines Einlagerungsproduktes, aus denen der leicht lösliche Emulgator mit Wasser nicht ausgewaschen werden kann.

Die Produkte ergeben in Einbrennlack eine zunehmend grünstichig klarere Nuance.

### Röntgenbeugungsspektren

Beispiel 3: 10,31 (100d), 8,28 (80d), 4,69 (20d), 3,92 (25d), 2,823 (20d), 2,747 (10d), 2,463 (10d);
Beispiel 4: 11,42 (30), 10,48 (100), 8,34 (20), 7,38 (15), 5,72 (10d), 5,21 (15), 4,70 (35), 4,15 (15), 3,89 (35), 2,82 (10d);
Beispiel 5: 11,54 (100), 8,22 (30), 5,77 (30), 5,21 (30), 4,74 (10), 4,20 (15), 3,84 (90), 2,896 (20), 2,796 (10), 2,323 (15), 1,931 (10).

## Beispiel 6

Arbeitet man nach dem Verfahren von Beispiel 3, gibt jedoch 30 g eines Umsetzungsproduktes von 4-(1-Methyl-1-phenylethyl)-phenol mit 27 Mol Ethylenoxid hinzu, so erhält man 76,9 g einer festen Lösung dieses Emulgators in dem Nickel-1 : 1-Komplex der Azobarbitursäure.

Analyse:
14,5% N; 10,5% Ni

IR-Spektrum (in KBr): 5,85 μ, 6,35 μ, 7,0 μ, 7,2 μ (Stufe).

Eine mittlere Bande bei 9,2 μ kann den Etherfunktionen des Emulgators zugeordnet werden.

Röntgenbeugungsspektrum: 11,36 (100), 9,07 (15), 8,08 (20), 5,70 (60), 5,12 (10), 4,12 (10d), 3,81 (50).

Die folgenden Beispiele 7—10 können mit den in der Tabelle aufgeführten Abweichungen nach dem Verfahren von Beispiel 6 hergestellt werden.

| Beispiel | Zusatz | Menge | Erhitzen | Ausbeute |
|---|---|---|---|---|
| 7 | Avolan ONP® (Ethylenaddukt einer Mannichbase) | 22,5 g | 1 h 70°C<br>4 h 95°C | 68,9 g |
| 8 | Emulgator U® (Ethylenoxidaddukt der Abietinsäure) | 30 g | 1 h 70°C<br>4 h 95°C | 73,6 g |
| 9 | Additionsprodukt von 15 Mol Ethylenoxid an Nonylphenol | 30 g | 4 h 95°C | 74,3 g |
| 10 | Armeen Z® (Additionsprodukt eines Kokosfettamins an Crotonsäure) | 30 g | | 66,9 g |

Röntgenbeugungsspektrum des Produktes nach Beispiel 9: 11,17 (100d), 7,85 (20d), 5,72 (50), 4,81 (40), 4,12 (40), 3,82 (45), 2,788 (15).

Beispiel 11

Ein nach 1c) hergestellter Preßkuchen wird mit 500 ml Wasser verrührt, 24 g des Natriumsalzes der 1,5-Naphthalin-disulfonsäure zugegeben und bei 70°C in 5 Minuten eine Lösung von 51 g $NiCl_2 \cdot 6\ H_2O$ und 21 g Trinatriumcitrat · 5,5 $H_2O$ in 150 ml Wasser zugetropft. Man erhitzt 1 Stunde auf 70°C und 3 Stunden auf 95°C, saugt ab und wäscht mit 1 l siedend heißem Wasser. Man erhält 76,5 g einer festen Lösung des Nickelsalzes der 1,5-Naphthalin-disulfonsäure in dem Nickelkomplex der Azobarbitursäure. Das Produkt färbt Einbrennlacke in klaren grünstichig gelben Tönen.

Beispiel 12

Verfährt man wie bei Beispiel 11, setzt jedoch 31 ml des Natriumsalzes der 1,3,6-Naphthalintrisulfonsäure hinzu und verwendet 55,1 g $NiCl_2 \cdot 6\ H_2O$, so erhält man 78 g eines Einlagerungsproduktes des Nickelsalzes der 1,3,6-Naphthalintrisulfonsäure in den Nickelkomplex der Azobarbitursäure.

Analyse:
13,9% N; 6,3: S; 15,1% Ni.

Beispiel 13

Verfährt man wie bei Beispiel 11, setzt jedoch 33 g des Natriumsalzes der 2-Naphthalinsulfonsäure und 10 g eines handelsüblichen Blockpolymeren aus Propylenoxid und Ethylenoxid (Pluriol PE 6800) hinzu, so erhält man 82,8 g des entsprechenden Einlagerungsproduktes.

Röntgenbeugungsspektrum: 11,47 (80), 9,39 (40d), 8,14 (10), 6,88 (80), 5,60 (40d), 5,04 (20) 4,82 (50), 4,57 (10), 3,94 (10), 3,81 (10), 3,66 (10), 3,44 (100), 2,656 (10), 2,536 (15d), 2,294 (10).

Beispiel 14

Zu einer analog Beispiel 1b) hergestellten Suspension des Natriumsalzes der Azobarbitursäure gibt man 34,5 g $NiCl_2 \cdot 6\ H_2O$ und erhitzt anschließend 30 Minuten auf 70°C und 4 Stunden auf 90°C. Anschließend wird wie bei Versuch 1c) aufgearbeitet. Man erhält 67,7 g eines Produktes, das nach der Elementaranalyse noch 4,7% Schwefel enthält. Dieser Schwefelmenge entsprechen 15,6 g des in heißem Wasser leicht löslichen Bezolsulfonamids, das als feste Lösung in dem Nickelkomplex der Azobarbitursäure vorliegt. Die Verbindung färbt Einbrennlacke in grünstichig gelben Tönen.

Beispiel 15

Verfährt man wie bei Beispiel 14, verwendet jedoch für die Herstellung des Natriumsalzes der Azobarbitursäure statt Benzolsulfonsäurehydrazid eine äquivalente Menge 4-Methylbenzolsulfonsäurehydrazid, so erhält man 68,4 g eines Produktes, das nach der Elementaranalyse 5,0% Schwefel

enthält, entsprechend 19,5 g 4-Methylbenzolsulfonamid. Die Verbindung besitzt ähnliche Eigenschaften wie das nach Beispiel 14 erhaltene Produkt.

## Beispiel 16

Ein nach Beispiel 1c) hergestellter Preßkuchen des Natriumsalzes der Azobarbitursäure wird mit 500 ml Wasser angerührt und eine Emulsion zugefügt, bestehend aus 20 g eines handelsüblichen Paraffins mit einem Schmelzpunkt von 42—44° C. 10 g eines Additionsproduktes von durchschnittlich 5 Mol Ethylenoxid an einen Fettalkohol mit einer durchschnittlichen Kettenlänge von 12 Kohlenstoffatomen und 100 ml Wasser. Man heizt auf 60°C, tropft in 5 Minuten eine Lösung von 34,5 g $NiCl_2 \cdot 6\ H_2O$ und 21 g Trinatriumcitrat $\cdot$ 5,5 $H_2O$ in 100 ml Wasser zu und erhitzt anschließend 3 Stunden auf 60° C und 1 Stunde auf 95° C. Nach der üblichen Aufarbeitung erhält man 81,1 g eines Produktes, das noch 4,3% Wasser enthält. Die Substanz färbt Einbrennlacke in grünstichig gelben Tönen.

## Beispiel 17

Gibt man zu einer analog zu Beispiel 16 hergestellten Anschlämmung des Natriumsalzes der Azobarbitursäure bei 70° C eine 70° C warme Emulsion von 30 g Hexadecanol, 10 g eines Additionsproduktes von 30 Mol Ethylenoxid an Nonylphenol und 100 ml Wasser und verfährt im übrigen wie bei Beispiel 16, wobei man jedoch 3 Stunden auf 70°C und 1 Stunde auf 95°C erhitzt, so erhält man 86,9 g eines Produktes, das Hexadecanol und den Emulgator in Form einer festen Lösung eingelagert enthält.

## Beispiel 18

Zu einer analog zu Beispiel 16 hergestellten Anschlämmung des Natriumsalzes der Azobarbitursäure gibt man bei 80° C eine 80° C warme wäßrige Emulsion von 30 g Stearinsäure und 12 g eines handelsüblichen Emulgators auf der Basis einer ethoxylierten Mannichbase und erhitzt anschließend noch 1 Stunde auf 80°C und 3 Stunden auf 95°C. Nach der üblichen Aufarbeitung erhält man 85,2 g eines Produktes, das ca. 30 g Stearinsäure als feste Lösung enthält. Das Produkt ergibt in Einbrennlacke eingearbeitet grünstichig gelbe Töne.

## Beispiel 19

Zu einer analog Beispiel 16 hergestellten Anschlämmung des Natriumsalzes der Azobarbitursäure gibt man bei 80° C eine Lösung aus 7,5 g eines Additionsproduktes aus 30 Mol Ethylenoxid an Nonylphenol, 42,5 g eines handelsüblichen hydrierten Abietinsäureharzes (Staybelite®) und 8 ml 10 N NaOH in 150 ml Wasser. Die Mischung wird 30 Minuten bei 80° C verrührt und anschließend in ca. 30 Minuten eine Lösung von 34,5 g $NiCl_2 \cdot 6\ H_2O$ in 100 ml Wasser zugetropft. Der Ansatz wird 1 Stunde bei 80° C und 2 Stunden bei 95° C gerührt, anschließend heiß abgesaugt und mit heißem Wasser gewaschen. Nach dem Trocknen bei 70° C im Umluftschrank erhält man 92,3 g eines Pigmentes, das in Weich-PVC eingearbeitet grünstichig gelbe Töne ergibt.

## Beispiel 20

Zu einer wie bei Beispiel 16 hergestellten Anschlämmung des Natriumsalzes der Azobarbitursäure gibt man bei 80° C eine Lösung von 8 g Additionsproduktes von 30 Mol Ethylenoxid an Nonylphenol und 16 g eines handelsüblichen hydrierten Abietinsäureharzes (Staybelite®) in einer Mischung von 100 ml Wasser und 4 ml 10 N NaOH. Anschließend tropft man in ca. 5 Minuten eine Lösung von 34,5 g $NiCl_2 \cdot 6\ H_2O$ und 13 g wasserfreiem Natriumacetat in 100 ml Wasser hinzu. Die Mischung wird 1 Stunde bei 80° C gerührt, 18 g Melamin zugefügt und nochmals 1 Stunde bei 80° C und 2 Stunden bei 95° C gerührt. Die übliche Aufarbeitung ergibt 91 g eines Produktes das Weich-PVC in grünstichig gelben Tönen färbt.

## Beispiel 21

Zu einer wie bei Beispiel 16 hergestellten Anschlämmung des Natriumsalzes der Azobarbitursäure gibt man bei 70°C 33,3 g des Natriumsalzes der 2-Naphthalinsulfonsäure und anschließend 44,8 g $NiCl_2 \cdot 6\ H_2O$ und 13 g wasserfreies Natriumacetat. Der Ansatz wird 30 Minuten bei 70° C gerührt und dann eine Lösung von 11,7 g Stearylamin und 3 ml Essigsäure in 150 ml Wasser zugefügt. Man erhitzt

weitere 30 Minuten auf 70 g und 3 Stunden auf 95° C. Nach der üblichen Aufarbeitung erhält man 86,8 g eines Produktes das ca. 46 g des 1 : 1-Nickelkomplexes und jeweils ca. 20 g des Nickel- bzw. Stearylammoniumsalzes der 2-Naphthalinsulfonsäure enthält. Das Pigment färbt Weich-PVC in grünstichig gelben Tönen.

Beispiel 22

Ein nach Beispiel 1c) hergestellter Preßkuchen wird mit 600 ml Wasser angerührt und 30 g eines handelsüblichen Blockpolymeren aus Propylen- und Ethylenoxid mit einem durchschnittlichen Molekulargewicht von ca. 8500 (Pluriol PE 6800) zugegeben. Der Ansatz wird 30 Minuten bei 50° C verrührt, in ca. 5 Minuten eine Lösung von 34,5 g $NiCl_2 \cdot 6 H_2O$ und 21 g Trinatriumcitrat in 150 ml Wasser zugetropft und noch 2 Stunden auf 50° C und 4 Stunden auf 95° C erhitzt. Nach der üblichen Aufarbeitung erhält man 78,2 g einer Einlagerungsverbindung, die Einbrennlacke in grünstichig gelben Tönen mit ausgezeichneter Lichtechtheit färbt.

Röntgenbeugungsspektrum: 11,22 (100), 9,02 (15), 5,69 (40), 4,81 (15), 4,17 (10), 3,84 (15d).

Beispiel 23

Verfährt man wie bei Beispiel 22, setzt jedoch anstelle des Blockpolymeren mit einem durchschnittlichen Molekulargewicht von ca. 8500 die gleiche Menge eines analog aufgebauten Polymeren mit einem durchschnittlichen Molekulargewicht von 12 000 (Pluriol SC 9361) zu, so erhält man 79,3 g eines Produktes mit ähnlichen Eigenschaften wie das nach Beispiel 22 erhaltene Produkt.

Beispiel 24

Zu einer analog Beispiel 16 hergestellten Anschlämmung des Natriumsalzes der Azobarbitursäure gibt man bei 95° C eine Mischung von 25 g eines Additionsproduktes von 30 Mol Ethylenoxid an Nonylphenol, 25 g eines handelsüblichen Harzes auf Basis von hydrierter Abietinsäure (Staybelite®) und 150 ml Wasser von 90° C. Nach 15 Minuten fügt man eine Lösung von 34,5 g $NiCl_2 \cdot 6 H_2O$ und 21 g Trinatriumcitrat in 100 ml Wasser hinzu und erhitzt noch 4 Stunden auf 95° C. Anschließend wird abgesaugt, mit heißem Wasser gewaschen und bei 70° C im Umlufttrockenschrank getrocknet. Ausbeute: 96,2 g. Das Produkt färbt Weich-PVC in grünstichig gelben Tönen.

Röntgenbeugungsspektrum: 11,37 (100), 9,06 (25), 8,05 (25), 5,66 (40d), 4,40 (15), 4,15 (10), 3,84 (35).

Beispiel 25

a) 25 g Benzolsulfonsäurehydrazid, 200 ml Wasser, 20 ml 10 N Salzsäure und 1,25 g eines Kondensationsproduktes von Stearinsäure mit Taurin werden 30 Minuten verrührt. Man fügt 60 g Eis hinein und tropft anschließend in ca. 30 Minuten 34 ml einer wäßrigen Natriumnitritlösung mit einem Gehalt von 30 g Natriumnitrit in 100 ml Lösung hinzu. Der Ansatz wird 30 Minuten gerührt, wobei man einen Nitritüberschuß aufrecht erhält. Anschließend zerstört man den Nitritüberschuß mit wenig Amidosulfonsäure und neutralisiert die überschüssige Säure mit ca. 5 ml 10 N Natronlauge (pH 4—7). Man erhält eine Emulsion von Bezolsulfonsäureazid.

b) Zu einer nach a) hergestellten Emulsion gibt man 18,1 g Barbitursäure und 30 ml 10 N Natronlauge. Die Mischung wird auf 70° C aufgeheizt und diese Temperatur 2 Stunden gehalten. Man erhält eine Lösung bzw. Suspension des Natriumsalzes der Diazobarbitursäure, die daneben noch Benzolsulfonamid enthält.

c) Zu einer nach b) hergestellten Suspension gibt man 22,5 g 2-Cyanimino-barbitursäure und 5 g Bernsteinsäure, rührt kurz nach und bringt danach den pH mit ca. 7,5 ml 10 N Natronlauge auf 5,5—5,6. Man erhöht die Temperatur auf 95° C und rührt 6 Stunden, wobei man den pH-Wert bei 5,5 und die Temperatur bei 95° C hält. Es entsteht eine Suspension des Natriumsalzes der Monocyanimino-azobarbitursäure.

d) Der pH-Wert einer nach c) hergestellten Suspension wird mit konz. Salzsäure auf pH 1 herabgesetzt und noch 1 Stunde auf 95° C erhitzt. Danach wird bei 90° C abgesaugt und mit 90° C heißem Wasser gewaschen. Nach dem Trocknen in einem Umlufttrockenschrank bei 70° C erhält man 47,3 g einer Verbindung, die in einer ihrer möglichen tautomeren Formen der folgenden Struktur-

formel entspricht

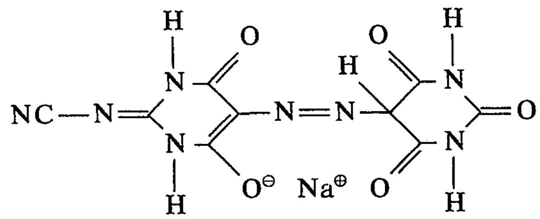

Die Verbindung enthält Kristallwasser, das bei schärferen Trocknen teilweise entfernt wird.

Analyse: (berechnet für $C_9H_5N_8O_5Na \cdot 2 H_2O$; MG 364,2)

| | | | |
|---|---|---|---|
| ber.: | 29,7% C, | 30,7% N, | 6,39: Na. |
| gef.: | 30,8% C*), | 30,6% N, | 6,1% Na. |

*) Da die letzten Reste an Verunreinigungen (Dispergiermittel, überschüssige Kupplungskomponenten, Benzolsulfonamid) nur schwer auszuwaschen sind, liegt der Kohlenstoffwert in der Regel etwas zu hoch.

Das IR-Spektrum in KBr (μ) zeigt drei intensive Banden bei 4,55; 6,15; 7,3.
Die Verbindung färbt Lacke und Kunststoffe in klaren orangen Tönen.

IR-Spektrum in KBr (μ): 4,55; 6,15; 7,7.

Die Verbindung färbt Alkydharzlacke in orangen Tönen.

## Beispiel 26

Ein nach Beispiel 25 d hergestellter Preßkuchen, der nach seinem Trockengehalt 45 g des Natriumsalzes der Monocyaniminobarbitursäure enthält, wird mit 500 ml Wasser angerührt und bei 95°C eine Lösung von 33 g $NiCl_2 \cdot 6 H_2O$ und 21 g Trinatriumcitrat · 5,5 $H_2O$ in 100 ml Wasser in ca. 5 Minuten zugetropft. Anschließend wird noch 4 Stunden auf 95°C erhitzt, danach abgesaugt und gründlich mit heißem Wasser gewaschen. Nach Trocknen bei 70°C erhält man 51,8 g eines Produktes, das bei 160°C weitere 8,2 g Wasser abgibt.

Analyse:
24,2% C, 24,0 N, 13,2 Ni.

Nach dieser Analyse handelt es sich um einen Nickel-1 : 1-Komplex der Monocyaniminoazobarbitursäure, der neben ca. 16% Wasser noch etwas Nickelcitrat enthalten könnte.

IR-Spektrum in KBr (μ): 4,55; 5,8; 6,3; 7,15.

Die Verbindung färbt Alkydharzlacke in gelblichbraunen Tönen.

## Beispiel 27

Verfährt man wie bei Beispiel 26, gibt jedoch zu der Suspension des Natriumsalzes zusätzlich noch 30 g 3-Nitrobenzolsulfonamid hinzu, so erhält man 72,3 g N eines Produktes, das bei 160°C noch 2,8% Wasser abgibt.

Das IR-Spektrum zeigt zusätzlich zu den Banden bei 4,55; 5,8; 6,3 und 7,2 μ noch Banden bei 6,55 und 7,4 μ, die in dem nach Beispiel 6 hergestellten Produkt nicht vorhanden sind und auf 3-Nitrobenzolsulfonamid zurückgeführt werden können.

## Beispiel 28

Verfährt man wie bei Beispiel 26, gibt jedoch zu der Suspension des Natriumsalzes zusätzlich 40 g Anthrachinon-2-sulfonsäure-Natriumsalz und tropft eine Lösung von 50 g $NiCl_2 \cdot 6 H_2O$ und 21 Trinatricitrat · 5,5 $H_2O$ in 150 ml Wasser zu, so erhält man 79,2 g eines Produktes, das bei 160°C noch 6,8% Wasser abgibt.

Das IR-Spektrum zeigt neben den Banden, wie sie die nach Beispiel 26 hergestellte Verbindung aufweist, noch zusätzliche Banden, die auf die Anthrachinonsulfonsäure zurückgeführt werden können.

Beispiel 29

a) 26,3 g Benzolsulfonsäurehydrazid, 100 ml Wasser, 21 ml 10 N Salzsäure und 1,3 g Emulgator FD (Fettalkohol-Ethylenoxidadditionsprodukt) werden 30 Minuten verrührt, 60 g Eis zugegeben und anschließend in ca. 30 Minuten eine Lösung von 19,5 g Natriumnitrit in 50 ml Wasser zugetropft. Der Ansatz wird 30 Minuten gerührt anschließend der Nitritüberschuß mit wenig Amidosulfonsäure zerstört und die überschüssige Säure mit ca. 5 ml 10 N Natronlauge neutralisiert. Man erhält eine Emulsion von Benzolsulfonsäureazid.

b) Zu einer nach a) hergestellten Emulsion gibt man 40 ml 10 N Natronlauge und streut danach 21,6 g 2-Cyanimino-barbitursäure ein. Man erhitzt den Ansatz 3 Stunden auf 70°C wobei der pH-Wert von Anfangs ca. 13 bis auf ca. 10 absinkt. Man erhält eine Lösung bzw. Suspension von 2-Cyanimino-5-diazobarbitursäure.

c) Zu einer nach b) hergestellten Suspension gibt man 22,2 g 2-Cyanimino-4-iminobarbitursäure und 5 g Glutarsäure, stellt den pH-Wert mit 5 ml 10 N Salzsäure auf 5,5 und rührt 5 Stunden bei 95°C und pH 5,5. Danach stellt man den pH-Wert mit wenig Salzsäure auf 4, gibt 39 g $BaCl_2 \cdot 2\,H_2O$ hinzu und hält noch 5 Stunden bei 95°C und pH 4. Isoliert man wie üblich, so erhält man 66,1 g eines Produktes, dem in einer seiner tautomeren Formen die folgende wahrscheinliche Struktur zukommt:

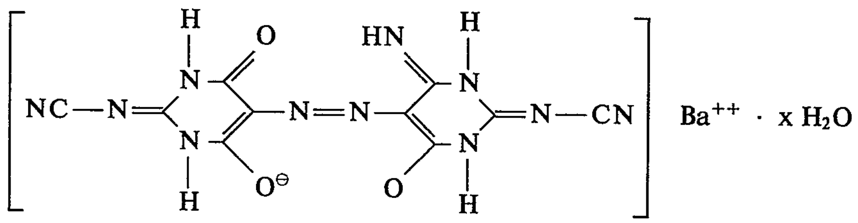

Analyse: (berechnet für $(C_{10}H_5N_{11}O_3)\,Ba \cdot 3\,H_2O$; MG 518,6)
ber.: 23,2% C, 29,7% N, 26,5% Ba.
gef.: 24,0% C, 29,7% N, 24,2% Ba.

Die Verbindung färbt Alkydharzlacke in Bordeauxtönen.

Beispiel 30

Verfährt man wie bei Beispiel 25 q—25 c, ersetzt jedoch die Cyanimino-barbitursäure durch die äquivaltent Menge 2-(4-Clorphenylmino)-barbitursäure, so erhält man nach Absaugen und Trocknen 61,2 g eines Produktes, das in einer seiner möglichen tautomeren Formen der folgenden Formel entspricht:

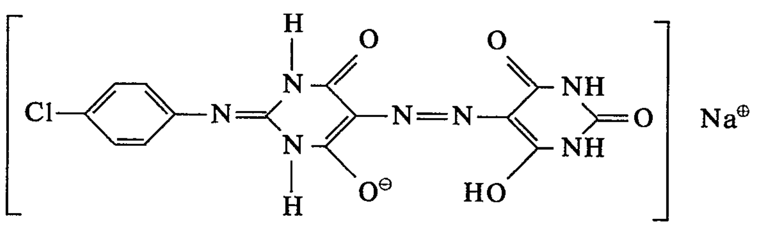

Analyse: (berechnet für $(C_{14}H_9ClN_7O_5) \cdot Na \cdot 2\,H_2O$; MG 449,8)
ber.: 37,4% C, 21,8% N.
gef.: 37,5% C, 20,5% N.

Die Verbindung ergibt in Alkydharzlack eingearbeitet gelborange Färbung.

Beispiel 31

Verfährt man wie bei Beispiel 30, trocknet jedoch den Preßkuchen nicht, sondern verrührt ihn nochmals mit 500 ml Wasser, erhitzt auf 95° C, gibt 19,6 g $BaCl_2 \cdot 2\ H_2O$ hierzu und erhitzt noch 3 Stunden auf 95° C, so erhält man nach der üblichen Aufarbeitung 66,5 g eines Produktes, das Alkydharzlack in orangen Tönen färbt.

Analyse: (berechnet für $(C_{14}H_9ClN_7O_5)_2Ba \cdot 4\ H_2O$; MG 990,9)
ber.: 33,9% C, 19,8% N.
gef.: 34,7% C, 19,4% N.

Beispiel 32

Verfährt man wie bei Beispiel 31, gibt jedoch an Stelle von Bariumchlorid eine Lösung von 34,5 g $NiCl_2 \cdot 6\ H_2O$ und 21 g Trinatriumcitrat · 5,5 $H_2O$ in 150 ml Wasser hinzu, so erhält man 59,7 g eines 1 : 1-Nickelkomplexes, der Alkydharzlack in gelbbraunen Tönen färbt.

Beispiel 33

Verfährt man wie bei Beispiel 32, gibt jedoch zusätzlich noch 30 g Pluriol PE 6400® (handelsübliches Ethylenoxid-Propylenoxid-Blockpolymer) hinzu vor Zugabe des Nickelsalzes, und wäscht gründlich sowohl mit heißem als auch mit kaltem Wasser, so erhält man 89,7 g einer Molekularverbindung aus dem Nickel-1 : 1-Komplex und dem Ethylenoxid-Propylenoxid-Blockpolymer. Die Verbindung ergibt klarere Töne als das nach Beispiel 32 hergestellte Produkt.

Beispiel 34

a) Zu einer nach Beispiel 29 b hergestellten Suspension von 2-Cyanimino-5-diazo-barbitursäure gibt man 22,5 g 2-Cyanimino-barbitursäure und 10 g Trinatriumcitrat · 5,5 $H_2O$, stellt mit 20 N-Salzsäure auf pH = 6,8 und erhitzt 16 Stunden bei diesem pH-Wert auf 95° C. Danach wird abgesaugt und mit 80° C heißem Wasser gewaschen. Man erhält eine Paste des Natriumsalzes der 4,4'-Biscyanimino-azobarbitursäure.
b) Eine nach 34 a hergestellte Paste wird mit 500 ml Wasser verrührt, 25 g wasserfreies Natriumacetat eingestreut und auf 95° C aufgeheizt. Dazu tropft man in 5 Minuten eine Lösung von 60 g $NiCl_2 \cdot 6\ H_2O$ in 200 ml Wasser und erhitzt den Ansatz noch 4 Stunden auf 95° C. Nach der üblichen Aufarbeitung erhält man 63,7 g eines Produktes, das in einer seiner tautomeren Formen der folgenden wahrscheinlichen Formel entspricht:

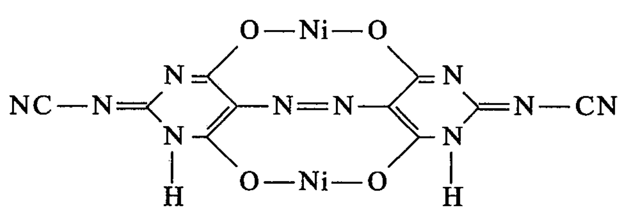

Analyse: (berechnet für $C_{10}H_2N_{10}O_4 \cdot 2\ Ni \cdot 8\ H_2O$; MG 857,7)
ber.: 20,4% C, 23,8% N, 20,0% Ni.
gef.: 20,8% C, 23,5% N, 19,1% Ni.

Die Verbindung ergibt in Alkydharzlacken gelbstichig braune Töne.

Beispiel 35

Verfährt man wie bei Beispiel 34 b, gibt jedoch vor dem Zutropfen der Nickelsalzlösung 30 g 3-Nitrobenzolsulfonamid zu dem Ansatz, so erhält man 80,0 g eines Produktes, das überwiegend aus einer Molekularverbindung des Komplexes nach Beispiel 34 mit 3-Nitrobenzolsulfonamid besteht, aus dem man auch mit viel heißem Wasser nur eine geringe Menge des Benzolsulfonamids herauswaschen kann.

Die Substanz färbt Alkydharzlacke in klareren Tönen als das nach Beispiel 34 hergestellte Produkt.

**Patentansprüche**

1. Einschlußverbindungen, Interkalationsverbindungen und feste Lösungen, dadurch gekennzeichnet, daß eine farbige organische Metallverbindung, die ein schichtförmiges Kristallgitter bildet, bei dem die Bindung innerhalb einer Schicht im wesentlichen über Wasserstoffbrücken und/oder Metallionen erfolgt, mindestens eine andere Verbindung eingeschlossen enthält, mit Ausnahme einer Stoffzusammensetzung, die aus 45 bis 82 Gew.-% Azobarbitursäure-Nickel-1 : 1-Komplex, 3 bis 15 Gew.-% Benzolsulfonamid, 5 bis 20 Gew.-% Nickelacetat und 10 bis 20 Gew.-% Wasser besteht.

2. Einschlußverbindung, Interkalationsverbindungen und feste Lösungen gemäß Anspruch 1, dadurch gekennzeichnet, daß es sich bei den farbigen organischen Metallverbindungen um Metallsalze oder Metallkomplex, insbesondere um Nickelsalze bzw. Komplexe von Verbindungen handelt, die in einer ihrer tautomeren Strukturen der Formel

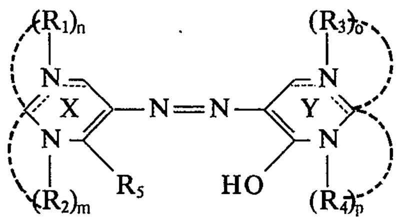

(I)

entsprechen, in der die mit

X und Y bezeichneten Ringe je einen oder zwei Substituenten aus der Reihe

$$=O,\quad =S,\quad =NR_7,\quad -NR_6R_7,\quad -OR_6,\quad -SR_6,\quad -COOR_6,\quad -CN,$$

$$-CONR_6R_7,\quad -SO_2R_8,\quad -\underset{\substack{|\\ R_6}}{N}-CN,\quad \text{Alkyl},\quad \text{Cycloalkyl},\quad \text{Aryl},\quad \text{Aralkyl}$$

tragen können, wobei die Summe der endo- und exocyclischen Doppelbindungen für jeden der Ringe X und Y drei ist,

$R_6$ für Wasserstoff, Alkyl, Cycloalkyl, Aryl oder Aralkyl und

$R_7$ für Wasserstoff, Cyan, Alkyl, Cycloalkyl, Aryl, Arakyl oder Acyl stehen und

$R_8$ Alkyl, Cycloalkyl, Aryl oder Aralkyl bezeichnet,

$R_1$, $R_2$, $R_3$, $R_4$ für Wasserstoff, Alkyl, Cycloalkyl, Aryl, oder Aralkyl stehen und weiterhin, wie in Formel I durch die unterbrochenen Linien angedeutet wird, 5- oder 6-gliedrige Ringe ausbilden können, an die weitere Ringe ankondensiert sein können,

$R_5$ $-OH$, $-NR_6R_7$, Alkyl, Cycloalkyl, Aryl oder Aralkyl bezeichnet, wobei die für $R_1-R_8$ genannten CH-Bindungen enthaltenden Substituenten ihrerseits substituiert sein können und m, n, o, p 1 oder für den Fall, daß von den Ring-Stickstoffatomen Doppelbindungen ausgehen, wie in Formel I durch die punktierten Linien angedeutet wird, auch 0 bezeichnen können.

3. Einschlußverbindungen, Interkalationsverbindungen und feste Lösungen gemäß Anspruch 1, dadurch gekennzeichnet, daß es sich bei der farbigen organischen Metallverbindung um ein Salz oder einen Komplex der Azobarbitursäure, insbesondere den Azobarbitursäure-Nickel-1 : 1-Komplex handelt.

4. Einschlußverbindungen, Interkalationsverbindungen und feste Lösungen gemäß den Ansprüchen 1—3, enthaltend eine cyclische oder acyclische organische Verbindung.

5. Einschlußverbindungen, Interkalationsverbindungen und feste Lösungen gemäß den Ansprüchen 1—3, enthaltend ein Carbonsäure- oder Sulfonsäureamid.

6. Einschlußverbindungen, Interkalationsverbindungen und feste Lösungen gemäß den Ansprüchen 1—3, enthaltend eine grenzflächenaktive Verbindung, insbesondere ein Tensid.

7. Einschlußverbindungen, Interkalationsverbindungen und feste Lösungen gemäß den Ansprüchen 1—3, enthaltend natürliche Harze und Harzsäuren sowie deren Umwandlungsprodukte und Salze.

8. Einschlußverbindungen, Interkalationsverbindungen und feste Lösungen gemäß den Ansprüchen 1—3, enthaltend Polymere, insbesondere wasserlösliche Polymere.

9. Einschlußverbindungen, Interkalationsverbindungen und feste Lösungen gemäß den Ansprüchen 1—3, enthaltend Farbstoffe.

10. Verwendung der Substanzen gemäß den Ansprüchen 1 bis 9 als Pigmente.

**Claims**

1. Inclusion compounds, intercalation compounds and solid solutions, characterised in that a coloured organic metal compound which forms a crystal lattice with a layer structure in which the bonding within a layer takes place essentially via hydrogen bridges and/or metal ions contains at least one other included compound, except for one composition of matter which consists of 45 to 82% by weight of azobarbituric acid/nickel 1 : 1 complex, 3 to 15% by weight of benzene-sulphonamide, 5 to 20% by weight of nickel acetate and 10 to 20% by weight of water.

2. Inclusion compounds, intercalation compounds and solid solutions, according to Claim 1, characterised in that the coloured organic metal compounds are metal salts or metal complexes, in particular nickel salts or complexes, of compounds which, in one of their tautomeric structures, correspond to the formula

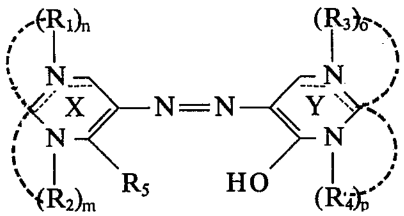

(I)

in which the rings designated

X and Y can each carry one or two substituents from the series comprising

$=O$, $=S$, $=NR_7$, $-NR_6R_7$, $-OR_6$, $-SR_6$, $-COOR_6$, $-CN$, $-CONR_6R_7$, $-SO_2R_8$, $-N(R_6)-CN$, alkyl, cycloalkyl, aryl and aralkyl

the total number of the endocyclic and exocyclic double bonds for each of the rings X and Y being three,
$R_6$ represents hydrogen, alkyl, cycloalkyl, aryl or aralkyl and
$R_7$ represents hydrogen, cyano, alkyl, cycloalkyl, aryl, aralkyl or acyl, and
$R_8$ designates alkyl, cycloalkyl, aryl or aralkyl,
$R_1$, $R_2$, $R_3$ and $R_4$ represent hydrogen, alkyl, cycloalkyl, aryl or aralkyl and can also, as indicated by the broken lines in the formula I, form 5- or 6-membered rings to which further rings can be fused,
$R_5$ designates $-OH$, $-NR_6R_7$, alkyl, cycloalkyl, aryl or aralkyl, it being possible for the substituents mentioned for $R_1-R_8$ and containing CH bonds in turn to be substituted and
m, n, o and p to designate 1, or in the case where double bonds extend from the ring nitrogen atoms, as indicated by the dotted lines in the formula I, also 0.

3. Inclusion compounds, intercalation compounds and solid solutions according to Claim 1, characterised in that the coloured organic metal compound is a salt or a complex of azobarbituric ancid, in particular the azobarbituric acid/nickel 1 : 1 complex.

4. Inclusion compounds, intercalation compounds and solid solutions according to Claims 1—3, containing a cyclic or acyclic organic compound.

5. Inclusion compounds, intercalation compounds and solid solutions according to Claims 1—3, containing a carboxamide or sulphonamide.

6. Inclusion compounds, intercalation compounds and solid solutions according to Claims 1—3, containing a surface-active compound, in particular a surfactant.

7. Inclusion compounds, intercalation compounds and solid solutions according to Claims 1—3, containing natural resins and resin acids and their conversion products and salts.

8. Inclusion compounds, intercalation compounds and solid solutions according to Claims 1—3, containing polymers, in particular water-soluble polymers.

9. Inclusion compounds, intercalation compounds and solid solutions according to Claims 1—3, containing dyestuffs.

10. Use of substances according to Claims 1 to 9, as pigments.

**Revendications**

1. Composés d'inclusion, composés d'intercalation et solutions solides, caractérisés en ce qu'un composé métallique organique coloré, qui forme un réseau cristallin stratifié dans lequel la liaison à l'intérieur d'une couche est principalement effectuée par des ponts hydrogène et/ou des ions métalliques, comporte au moins un autre composé inclus, à l'exclusion d'une composition de matière qui comprend 45 à 82% en poids de complexe à 1 : 1 d'acide azobarbiturique et de nickel, 3 à 15% en poids de benzènesulfamide, 5 à 20% en poids d'acétate de nickel et 10 à 20% en poids d'eau.

2. Composés d'inclusion, composés d'intercalation et solutions solides suivant la revendication 1, caractérisés en ce que les composés métalliques organiques colorés sont des sels métalliques ou un complexe métallique, notamment des sels de nickel ou des complexes de composés qui répondent, sous l'une de leurs structures tautomères, à la formule

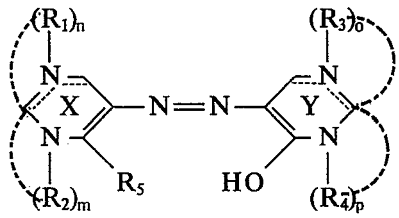

(I)

dans laquelle les noyaux désignés par

X et Y peuvent porter chacun un ou deux substituants de la série

$=O$, $=S$, $=NR_7$, $-NR_6R_7$, $-OR_6$, $-SR_6$, $-COOR_6$, $-CN$,

$-CONR_6R_7$, $-SO_2R_8$, $-N(R_6)-CN$, alkyle, cyloalkyle, aryle, aralkyle

la somme des doubles liaisons endocycliques et exocycliques pour chacun des noyaux X et Y étant égal à 3,

$R_6$ représente l'hydrogène ou un groupe alkyle, cycloylkyle, aryle ou aralkyle et

$R_7$ représente l'hydrogène ou un groupe cyano, alkyle, cycloalkyle, aryle, aralkyle ou acyle et

$R_8$ représente un groupe alkyle, cycloalkyle, aryle ou aralkyle,

$R_1$, $R_2$, $R_3$, $R_4$ peuvent représenter l'hydrogène ou un groupe alkyle, cycloalkyle, aryle ou aralkyle et peuvent en outre former des noyaux pentagonaux ou hexagonaux, comme indiqué dans la formule I par les segments en traits interrompus, auxquels les autres noyaux peuvent être condensés,

$R_5$ désigne un groupe $-OH$, $-NR_6R_7$, alkyle, cycloalkyle, aryle ou aralkyle, les substituants contenant les liaisons CH mentionnées pour $R_1-R_8$ pouvant être substituées quant à elles et les indices m, n, o, p pouvant être égaux à 1 ou, au cas où des doubles liaisons partent des atomes d'azote du noyau, comme indiqué dans la formule I par des segments en traits interrompus, ces indices peuvent aussi être égaux à 0.

3. Composés d'inclusion, composés d'intercalation et solutions solides suivant la revendication 1, caractérisés en ce que le composé métallique organique coloré est un sel ou un complexe de l'acide azobarbiturique, notamment le complexe à 1 : 1 de l'acide azobarbiturique et de nickel.

4. Composés d'inclusion, composés d'intercalation et solutions solides suivant les revendications 1 à 3, contenant un composé organique cyclique ou acyclique.

5. Composés d'inclusion, composés d'intercalation et solutions solides suivant les revendications 1 à 3, contenant un amide d'acide carboxylique ou d'acide sulfonique.

6. Composés d'inclusion, composés d'intercalation et solutions solides suivant les revendications 1 à 3, contenant un composé doué d'activé interfaciale, notamment un composé tensio-actif.

7. Composés d'inclusion, composés d'intercalation et solutions solides suivant les revendications 1 à 3, contenant des résines naturelles et des acides résiniques ainsi que leurs produits de transformation et leurs sels.

8. Composés d'inclusion, composés d'intercalation et solutions solides suivant les revendications 1—3, contenant des polymères, notamment des polymères hydrosolubles.

9. Composés d'inclusion, composés d'intercalation et solutions solides suivant les revendications 1—3, contenant des colorants.

10. Utilisation des substances suivant les revendications 1 à 9 comme pigments.